# EUROPEAN PATENT SPECIFICATION

(11) **EP 4 554 114 B1**
(45) Date of publication and mention of the grant of the patent: **04.11.2026**
(21) Application number: 25167056.8
(22) Date of filing: 17.01.2023
(51) Int. Cl.: H04B 7/185

(54) **MIXED NTN AND TN POSITIONING CONFIGURATIONS FOR NR POSITIONING AND RELATED UE CAPABILITIES**
GEMISCHTE NTN- UND TN-POSITIONIERUNGSKONFIGURATIONEN ZUR NR-POSITIONIERUNG UND ZUGEHÖRIGE BENUTZERGERÄTEFÄHIGKEITEN
CONFIGURATIONS DE POSITIONNEMENTS MIXTES NTN ET TN DESTINÉES À UN POSITIONNEMENT NR ET CAPACITÉS D'UE ASSOCIÉES

(30) Priority: 15.02.2022 IN 202221007923
(43) Date of publication of application: 14.05.2025
(62) Document number(s) of the earlier application(s) in accordance with Art. 76 EPC: 23706884.6 / 4 480 107
(73) Proprietor: QUALCOMM Incorporated, San Diego, CA 92121-1714 (US)
(72) Inventor: MANOLAKOS, Alexandros, San Diego, 92121 (US); KUMAR, Mukesh, San Diego, 92121 (US); YERRAMALLI, Srinivas, San Diego, 92121 (US)
(74) Representative: Reddie & Grose LLP

(56) References cited:
- WO-A1-2020/062092
- WO-A1-2021/240477
- WO-A1-2022/010626
- US-A1- 2021 360 461
- OPPO: "Draft CR to general measurement requirements for NTN", vol. RAN WG4, no. Electronic Meeting; 20220221 - 20220303, 14 February 2022 (2022-02-14), XP052111659, Retrieved from the Internet <URL:https://ftp.3gpp.org/tsg_ran/WG4_Radio/TSGR4_102-e/Docs/R4-2204297.zip R4-2204297 Draft CR to general measurement requirement for NTN.docx> [retrieved on 20220214]
- QUALCOMM INCORPORATED: "Summary of [AT116bis-e][616][POS] Remaining proposals on latency reduction", vol. RAN WG2, no. Electronic Meeting; 20220117 - 20220125, 24 January 2022 (2022-01-24), XP052102682, Retrieved from the Internet <URL:https://ftp.3gpp.org/tsg_ran/WG2_RL2/TSGR2_116bis-e/Inbox/R2-2201875.zip R2-2201875_([616][POS] Latency Reduction)_Summary.docx> [retrieved on 20220124]
- HUAWEI ET AL: "Discussion on measurement requirements for NTN", vol. RAN WG4, no. Electronic Meeting; 20220221 - 20220303, 14 February 2022 (2022-02-14), XP052112526, Retrieved from the Internet <URL:https://ftp.3gpp.org/tsg_ran/WG4_Radio/TSGR4_102-e/Docs/R4-2205377.zip R4-2205377.docx> [retrieved on 20220214]

## Description

### TECHNICAL FIELD

The present disclosure relates generally to communication systems, and more particularly, to wireless communications involving positioning.

### INTRODUCTION

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

Some communication system may also support a number of cellular network-based positioning technologies, where the geographic location of a wireless device may be determined based on measuring radio signals exchanged between the wireless device and other wireless devices. For example, a distance between a wireless device and a transmission reception point (TRP) may be estimated based on the time it takes for a reference signal (e.g., a positioning reference signal (PRS)) transmitted from the TRP to reach the wireless device. Other examples of cellular network-based positioning technologies may include downlink-based, uplink-based, and/or downlink-and-uplink-based positioning methods.

OPPO: "Draft CR to general measurement requirements for NTN" describes general requirements on a UE regarding measurement reporting in an RRC_CONNECTED state.

WO 2021/240477 A1 relates to methods for reporting positioning measurements. One method includes receiving positioning measurement configuration information including: a list of candidate beams, wherein each candidate beam of the list of candidate beams is associated with a positioning reference signal; a priority indicator; a temporal switching criteria; and/or a reporting criteria for positioning. The reporting criteria includes a positioning reference signal received power, a non-line-of-sight measurement indicator, a line-of-sight measurement indicator, and/or a reporting priority for each candidate beam of the list of candidate beams. The method includes measuring a positioning reference signal associated with each candidate beam of the list of candidate beams based on an associated positioning reference signal configuration. The method includes reporting positioning measurements based on the reporting criteria for at least one candidate beam of the list of candidate beams.

The 3GPP paper R2-2201875 by Qualcomm Incorporated: "Summary of [AT116bis-e][616][POS] Remaining Proposals on latency reduction", summarizes various proposals relating to validity conditions for preconfigured assistance data, measurement gaps, and PRS processing windows.

### BRIEF SUMMARY

The scope of protection is defined by the appended claims, to which reference should be made.

### BRIEF DESCRIPTION OF THE DRAWINGS

FIG. 1 is a diagram illustrating an example of a wireless communications system and an access network.
FIG. 2A is a diagram illustrating an example of a first frame, in accordance with various aspects of the present disclosure.
FIG. 2B is a diagram illustrating an example of DL channels within a subframe, in accordance with various aspects of the present disclosure.
FIG. 2C is a diagram illustrating an example of a second frame, in accordance with various aspects of the present disclosure.
FIG. 2D is a diagram illustrating an example of UL channels within a subframe, in accordance with various aspects of the present disclosure.
FIG. 3 is a diagram illustrating an example of a base station and user equipment (UE) in an access network.
FIG. 4 is a diagram illustrating an example of a UE positioning based on reference signal measurements in accordance with various aspects of the present disclosure.
FIG. 5A is a diagram illustrating an example of downlink-positioning reference signal (DL-PRS) transmitted from multiple transmission-reception points (TRPs) in accordance with various aspects of the present disclosure.
FIG. 5B is a diagram illustrating an example of uplink-sounding reference signal (UL-SRS) transmitted from a UE in accordance with various aspects of the present disclosure.
FIG. 6 is a diagram illustrating an example of estimating a position of a UE based on multi-round trip time (RTT) measurements from multiple TRPs in accordance with various aspects of the present disclosure.
FIG. 7 is a communication flow illustrating an example multi-RTT positioning procedure in accordance with various aspects of the present disclosure.
FIG. 8 is a diagram illustrating an example of a non-terrestrial network (NTN) architecture based on transparent payload in accordance with various aspects of the present disclosure.
FIG. 9 is a diagram illustrating an example of an NTN architecture based on regenerative payload in accordance with various aspects of the present disclosure.
FIG. 10A is a diagram illustrating an example network that includes both NTN and TN devices in accordance with various aspects of the present disclosure.
FIG. 10B is a diagram illustrating an example network that includes both NTN and TN devices in accordance with various aspects of the present disclosure.
FIG. 11A is a diagram illustrating an example of mapping a same physical cell identity (PCI) for multiple satellite beams in accordance with various aspects of the present disclosure.
FIG. 11B is a diagram illustrating an example of mapping one PCI per satellite beam in accordance with various aspects of the present disclosure.
FIG. 12 is a communication flow illustrating an example of an NTN satellite configured with a wide beam and multiple narrow beams in accordance with various aspect of the present disclosure.
FIG. 13 is a diagram illustrating an example PRS resource measurement prioritization in accordance with various aspects of the present disclosure.
FIG. 14 is a diagram illustrating an example of associating TN and NTN with different PFLs in accordance with various aspects of the present disclosure.
FIG. 15 is a diagram illustrating an example of a UE positioning in accordance with various aspects of the present disclosure.
FIG. 16 is a diagram illustrating an example of associating one or more beams/cells of a first satellite with one or more beams/cells of a second satellite in accordance with various aspects of the present disclosure.
FIG. 17 is a flowchart of a method of wireless communication in accordance with aspects presented herein.
FIG. 18 is a diagram illustrating an example of a hardware implementation for an example apparatus in accordance with aspects presented herein.
FIG. 19 is a flowchart of a method of wireless communication in accordance with aspects presented herein.
FIG. 20 is a diagram illustrating an example of a hardware implementation for an example apparatus in accordance with aspects presented herein.
FIG. 21 is a flowchart of a method of wireless communication in accordance with aspects presented herein.
FIG. 22 is a diagram illustrating an example of a hardware implementation for an example apparatus in accordance with aspects presented herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the types of computer-readable media, or any other medium that can be used to store computer executable code in the form of instructions or data structures that can be accessed by a computer.

While aspects and implementations are described in this application by illustration to some examples, those skilled in the art will understand that additional implementations and use cases may come about in many different arrangements and scenarios. Innovations described herein may be implemented across many differing platform types, devices, systems, shapes, sizes, and packaging arrangements. For example, implementations and/or uses may come about via integrated chip implementations and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range a spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also include additional components and features for implementation and practice of claimed and described aspect. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, aggregated or disaggregated components, end-user devices, etc. of varying sizes, shapes, and constitution.

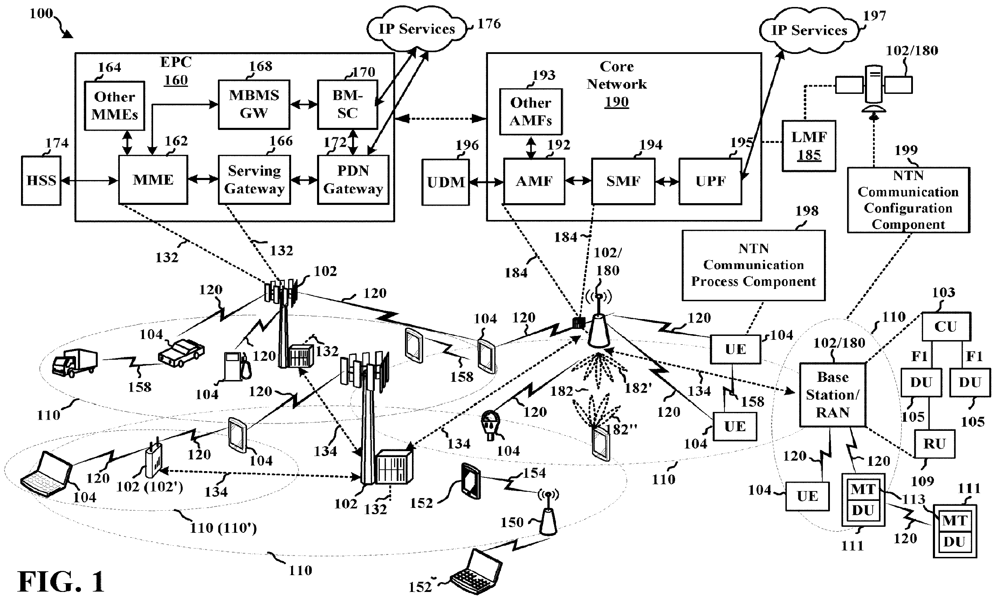

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

Aspects presented herein may enable a UE to communicate with one or more NTN base stations in a more efficient manner to improve latency and accuracy of NTN positioning.

In certain aspects, the UE 104 may include an NTN communication process component 198 configured to apply different communication parameters when communicating with an NTN base station. In one configuration, the NTN communication process component 198 may be configured to communicate with at least one TN base station via a first set of PFLs for a UE positioning session. In such a configuration, the NTN communication process component 198 may communicate with at least one NTN base station via a second set of PFLs for the UE positioning session, the second set of PFLs being different from the first set of PFLs. In another configuration, the NTN communication process component 198 may be configured to measure a first RS that is transmitted from a base station via a wide beam, the wide beam having a coverage over an area. In such a configuration, the NTN communication process component 198 may measure at least one second RS that is transmitted from the base station via at least one narrow beam based on the first RS being successfully decoded, each of the at least one narrow beam covering a portion of the area.

In certain aspects, a base station 102/180 may include an NTN communication configuration component 199 configured to transmit reference signals via wide beam(s) and narrow beams. In one configuration, the NTN communication configuration component 199 may be configured to transmit, to a UE, a first RS via a wide beam, the wide beam having a coverage over an area. In such configuration, the NTN communication configuration component 199 may transmit, to the UE, at least one second RS via at least one narrow beam, each of the at least one narrow beam covering a portion of the area.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

In some aspects, a base station 102 or 180 may be referred as a RAN and may include aggregated or disaggregated components. As an example of a disaggregated RAN, a base station may include a central unit (CU) 103, one or more distributed units (DU) 105, and/or one or more remote units (RU) 109, as illustrated in FIG. 1. A RAN may be disaggregated with a split between an RU 109 and an aggregated CU/DU. A RAN may be disaggregated with a split between the CU 103, the DU 105, and the RU 109. A RAN may be disaggregated with a split between the CU 103 and an aggregated DU/RU. The CU 103 and the one or more DUs 105 may be connected via an F1 interface. A DU 105 and an RU 109 may be connected via a fronthaul interface. A connection between the CU 103 and a DU 105 may be referred to as a midhaul, and a connection between a DU 105 and an RU 109 may be referred to as a fronthaul. The connection between the CU 103 and the core network may be referred to as the backhaul. The RAN may be based on a functional split between various components of the RAN, e.g., between the CU 103, the DU 105, or the RU 109. The CU may be configured to perform one or more aspects of a wireless communication protocol, e.g., handling one or more layers of a protocol stack, and the DU(s) may be configured to handle other aspects of the wireless communication protocol, e.g., other layers of the protocol stack. In different implementations, the split between the layers handled by the CU and the layers handled by the DU may occur at different layers of a protocol stack. As one, non-limiting example, a DU 105 may provide a logical node to host a radio link control (RLC) layer, a medium access control (MAC) layer, and at least a portion of a physical (PHY) layer based on the functional split. An RU may provide a logical node configured to host at least a portion of the PHY layer and radio frequency (RF) processing. A CU 103 may host higher layer functions, e.g., above the RLC layer, such as a service data adaptation protocol (SDAP) layer, a packet data convergence protocol (PDCP) layer. In other implementations, the split between the layer functions provided by the CU, DU, or RU may be different.

An access network may include one or more integrated access and backhaul (IAB) nodes 111 that exchange wireless communication with a UE 104 or other IAB node 111 to provide access and backhaul to a core network. In an IAB network of multiple IAB nodes, an anchor node may be referred to as an IAB donor. The IAB donor may be a base station 102 or 180 that provides access to a core network 190 or EPC 160 and/or control to one or more IAB nodes 111. The IAB donor may include a CU 103 and a DU 105. IAB nodes 111 may include a DU 105 and a mobile termination (MT) 113. The DU 105 of an IAB node 111 may operate as a parent node, and the MT 113 may operate as a child node.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100, 400, etc. MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR2-2 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR2-2, and/or FR5, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. In some scenarios, the term UE may also apply to one or more companion devices such as in a device constellation arrangement. One or more of these devices may collectively access the network and/or individually access the network.

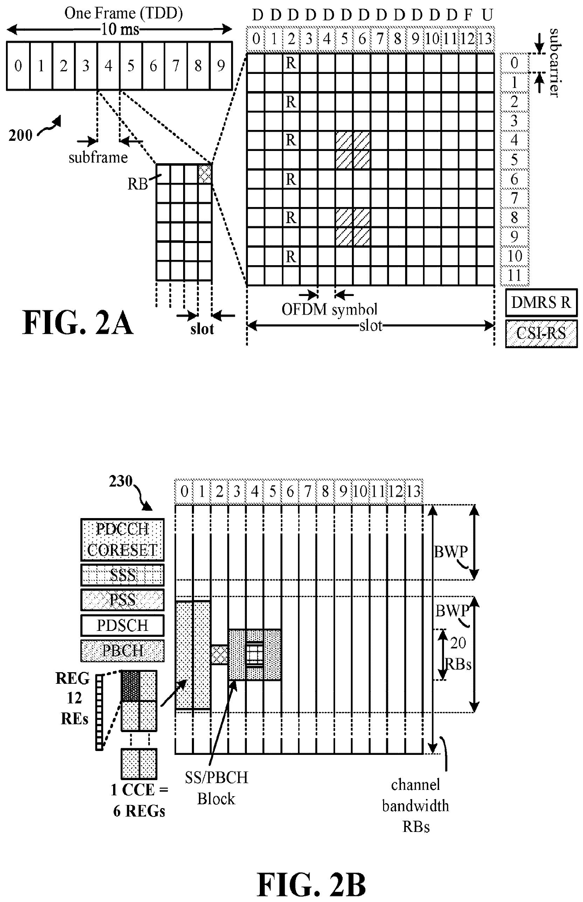

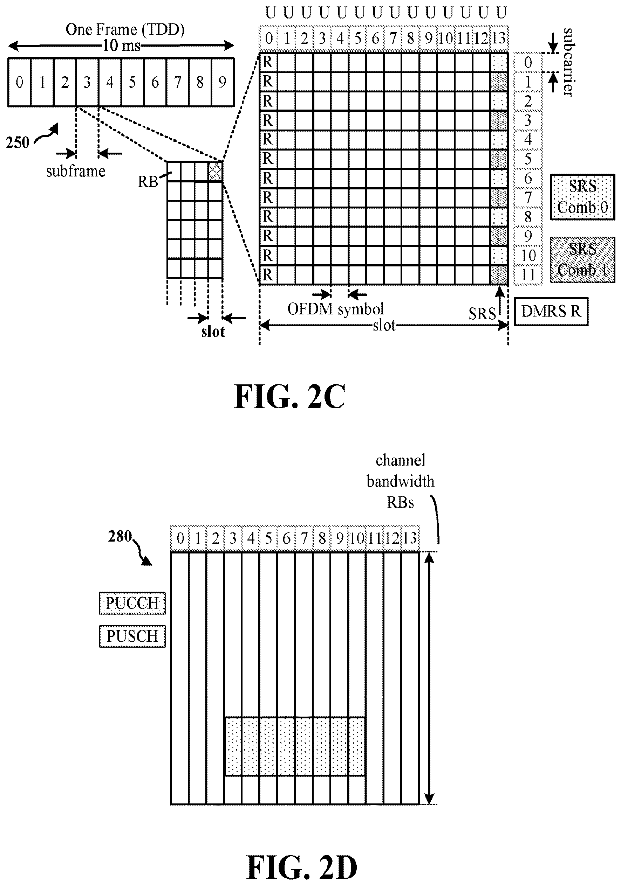

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semistatically/statically through radio resource control (RRC) signaling) through a received slot format indicator (SFI). Note that the description *infra* applies also to a 5G NR frame structure that is TDD.

FIGs. 2A-2D illustrate a frame structure, and the aspects of the present disclosure may be applicable to other wireless communication technologies, which may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 14 or 12 symbols, depending on whether the cyclic prefix (CP) is normal or extended. For normal CP, each slot may include 14 symbols, and for extended CP, each slot may include 12 symbols. The symbols on DL may be CP orthogonal frequency division multiplexing (OFDM) (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the CP and the numerology. The numerology defines the subcarrier spacing (SCS) and, effectively, the symbol length/duration, which is equal to 1/SCS.

| *µ* | **SCS** | **Cyclic prefix** |
|---|---|---|
| | Δ*f* = 2*^{µ}* · 15[kHz] | |
| 0 | 15 | Normal |
| 1 | 30 | Normal |
| 2 | 60 | Normal, Extended |
| 3 | 120 | Normal |
| 4 | 240 | Normal |

For normal CP (14 symbols/slot), different numerologies µ 0 to 4 allow for 1, 2, 4, 8, and 16 slots, respectively, per subframe. For extended CP, the numerology 2 allows for 4 slots per subframe. Accordingly, for normal CP and numerology µ, there are 14 symbols/slot and 2^{µ} slots/subframe. The subcarrier spacing may be equal to 2*^{µ}* * 15 kHz, where *µ* is the numerology 0 to 4. As such, the numerology µ=0 has a subcarrier spacing of 15 kHz and the numerology µ=4 has a subcarrier spacing of 240 kHz. The symbol length/duration is inversely related to the subcarrier spacing. FIGs. 2A-2D provide an example of normal CP with 14 symbols per slot and numerology µ=2 with 4 slots per subframe. The slot duration is 0.25 ms, the subcarrier spacing is 60 kHz, and the symbol duration is approximately 16.67 µs. Within a set of frames, there may be one or more different bandwidth parts (BWPs) (see FIG. 2B) that are frequency division multiplexed. Each BWP may have a particular numerology and CP (normal or extended).

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequencydependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) acknowledgment (ACK) (HARQ-ACK) feedback (i.e., one or more HARQ ACK bits indicating one or more ACK and/or negative ACK (NACK)). The PUSCH carries data, and may additionally be used to carry a buffer status report (BSR), a power headroom report (PHR), and/or UCI.

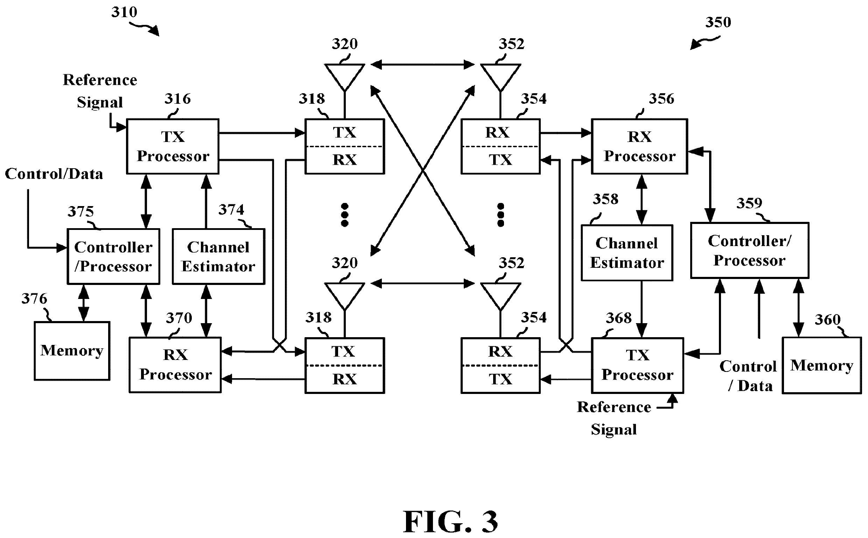

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318 TX. Each transmitter 318 TX may modulate a radio frequency (RF) carrier with a respective spatial stream for transmission.

At the UE 350, each receiver 354 RX receives a signal through its respective antenna 352. Each receiver 354 RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with the NTN communication process component 198 of FIG. 1.

At least one of the TX processor 316, the RX processor 370, and the controller/processor 375 may be configured to perform aspects in connection with the NTN communication configuration component 199 of FIG. 1.

A network may support a number of cellular network-based positioning technologies, such as downlink-based, uplink-based, and/or downlink-and-uplink-based positioning methods. Downlink-based positioning methods may include an observed time difference of arrival (OTDOA) (e.g., in LTE), a downlink time difference of arrival (DL-TDOA) (e.g., in NR), and/or a downlink angle-of-departure (DL-AoD) (e.g., in NR). In an OTDOA or DL-TDOA positioning procedure, a UE may measure the differences between each time of arrival (ToA) of reference signals (e.g., positioning reference signals (PRSs)) received from pairs of base stations, referred to as reference signal time difference (RSTD) measurements or time difference of arrival (TDOA) measurements, and report them to a positioning entity (e.g., a location management function (LMF) 185). For example, the UE may receive identifiers (IDs) of a reference base station (which may also be referred to as a reference cell or a reference gNB) and at least one non-reference base station in assistance data (AD). The UE may then measure the RSTD between the reference base station and each of the non-reference base stations. Based on the known locations of the involved base stations and the RSTD measurements, the positioning entity may estimate a location of the UE. In other words, a position of the UE may be estimated based on measuring reference signals transmitted between the UE and one or more base stations and/or transmission-reception points (TRPs) of the one or more base stations. As such, the PRSs may enable UEs to detect and measure neighbor TRPs, and to perform positioning based on the measurement. For purposes of the present disclosure, the suffixes "-based" and "-assisted" may refer respectively to the node that is responsible for making the positioning calculation (and which may also provide measurements) and a node that provides measurements (but which may not make the positioning calculation). For example, an operation in which measurements are provided by a UE to a base station/positioning entity to be used in the computation of a position estimate may be described as "UE-assisted," "UE-assisted positioning," and/or "UE-assisted position calculation" while an operation in which a UE computes its own position may be described as "UE-based," "UE-based positioning," and/or "UE-based position calculation."

In some examples, the term "TRP" may refer to one or more antennas of a base station whereas the term "base station" may refer to a complete unit (e.g., the base station 102/180). In other words, a TRP may be a set of geographically co-located antennas (e.g., antenna array (with one or more antenna elements)) supporting transmission point (TP) and/or reception point (RP) functionality. For example, a TRP may be similar to a transceiver of a UE. As such, a base station may transmit signal to and/or receive signal from other wireless device (e.g., a UE, another base station, etc.) via one or more TRPs. For purposes of the present disclosure, in some examples, the term "TRP" may be used interchangeably with the term "base station."

For DL-AoD positioning, the positioning entity may use a beam report from the UE of received signal strength measurements of multiple downlink transmit beams to determine the angle(s) between the UE and the transmitting base station(s). The positioning entity may then estimate the location of the UE based on the determined angle(s) and the known location(s) of the transmitting base station(s).

Uplink-based positioning methods may include UL-TDOA and UL-AoA. UL-TDOA is similar to DL-TDOA, but is based on uplink reference signals (e.g., sounding reference signals (SRSs)) transmitted by the UE. For UL-AoA positioning, one or more base stations may measure the received signal strength of one or more uplink reference signals (e.g., SRSs) received from a UE on one or more uplink receive beams. The positioning entity may use the signal strength measurements and the angle(s) of the receive beam(s) to determine the angle(s) between the UE and the base station(s). Based on the determined angle(s) and the known location(s) of the base station(s), the positioning entity can then estimate the location of the UE.

Downlink-and-uplink-based positioning methods may include enhanced cell-ID (E-CID) positioning and multi-round-trip-time (RTT) positioning (also referred to as "multi-cell RTT"). In an RTT procedure, an initiator (a base station or a UE) transmits an RTT measurement signal (e.g., a PRS or SRS) to a responder (a UE or a base station), which transmits an RTT response signal (e.g., an SRS or a PRS) back to the initiator. The RTT response signal may include the difference between the ToA of the RTT measurement signal and the transmission time of the RTT response signal, referred to as the reception-to-transmission (Rx-Tx) time difference. The initiator may calculate the difference between the transmission time of the RTT measurement signal and the ToA of the RTT response signal, referred to as the transmission-to-reception (Tx-Rx) time difference. The propagation time (also referred to as the "time of flight") between the initiator and the responder may be calculated from the Tx-Rx and Rx-Tx time differences. Based on the propagation time and the known speed of light, the distance between the initiator and the responder may be determined. For multi-RTT positioning, a UE may perform an RTT procedure with multiple base stations to enable its location to be determined (e.g., using multilateration) based on the known locations of the base stations. RTT and multi-RTT methods may be combined with other positioning techniques, such as UL-AoA and DL-AoD, to improve location accuracy.

The E-CID positioning method may be based on radio resource management (RRM) measurements. In E-CID, the UE may report the serving cell ID and the timing advance (TA), as well as the identifiers, estimated timing, and signal strength of detected neighbor base stations. The location of the UE may then be estimated based on this information and the known locations of the base station(s).

To assist positioning operations, a network entity (e.g., a location server, an LMF, or an SLP) may provide assistance data to the UE. For example, the assistance data may include identifiers of the base stations (or the cells/TRPs of the base stations) from which to measure reference signals, the reference signal configuration parameters (e.g., the number of consecutive positioning subframes, periodicity of positioning subframes, muting sequence, frequency hopping sequence, reference signal identifier, reference signal bandwidth, etc.), and/or other parameters applicable to the particular positioning method. Alternatively, the assistance data may originate directly from the base stations (e.g., in periodically broadcasted overhead messages, etc.). In some cases, the UE may be able to detect neighbor network nodes without the use of assistance data.

In the case of an OTDOA or DL-TDOA positioning procedure, the assistance data may further include an expected RSTD value and an associated uncertainty (e.g., a search space window) around the expected RSTD. In some cases, the value range of the expected RSTD may be plus-minus (+/-) 500 microseconds (µs). In some cases, when any of the resources used for the positioning measurement are in FR1, the value range for the uncertainty of the expected RSTD may be +/-32 µs. In other cases, when all of the resources used for the positioning measurement(s) are in FR2, the value range for the uncertainty of the expected RSTD may be +/-8 µs. In this context, "RSTD" may refer to one or more measurements indicative of a difference in time of arrival between a PRS transmitted by a base station, referred to herein as a "neighbor base station" or a "measuring base station," and a PRS transmitted by a reference base station. A reference base station may be selected by a location server and/or by a UE to provide good or sufficient signal strength observed at a UE, such that a PRS may be more accurately and/or more quickly acquired and/or measured, such as without any special assistance from a serving base station.

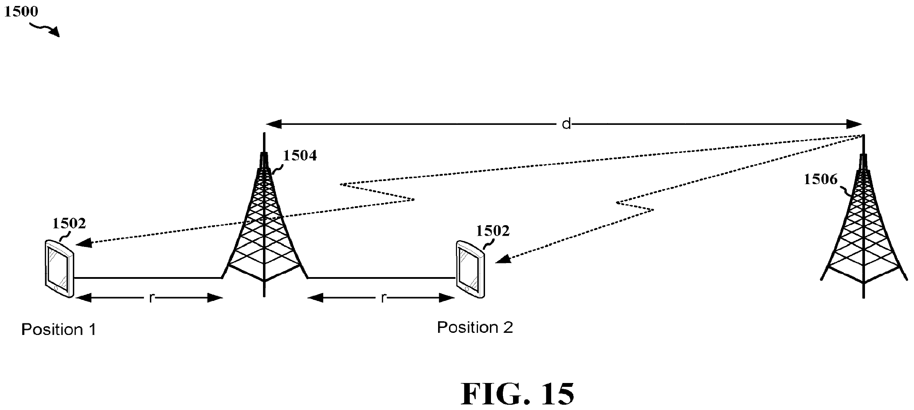

FIG. 15 is a diagram 1500 illustrating an example of a UE positioning in accordance with various aspects of the present disclosure. A UE 1502 may be receive and measure a first PRS transmitted from a measuring base station 1504. By measuring the first PRS transmitted from the measuring base station 1504, the UE 1502 may be able to estimate a distance (r) between the UE 1502 and the measuring base station 1504, but the UE 1502 may not be able to determine its position as the UE 1502 may be at left (or west) of the neighbor base station 1504 (e.g., marked as Position 1 in FIG. 15) or at right (or east) of the neighbor base station 1504 (e.g., marked as Position 2 in FIG. 15). However, if the UE 1502 is also able to measure a second PRS transmitted from a reference base station 1506, then based on the arrival time of the second PRS, the UE 1502 may estimate whether it is at Position 1 or Position 2 as it may take more time for the second PRS to reach Position 1 compared to the time for the second PRS to reach Position 2. As such, by receiving PRSs from multiple base stations and comparing the measurement with a reference base station, a UE's position may be determined. For example, a UE may measure the differences between ToA of PRSs received from pairs of base stations (e.g., RSTD measurements or TDOA measurements) and report them to an LMF. Based on the known locations of the involved base stations and the RSTD measurements, the LMF may estimate a location of the UE. The expected RSTD and the uncertainty associated with the expected RSTD in assistance data may provide the UE with a measurement window to further assist the UE with the measurement and positioning.

A location estimate may also be referred to as a position estimate, location, position, position fix, fix, or the like. A location estimate may be geodetic and include coordinates (e.g., latitude, longitude, and possibly altitude) or may be civic and include a street address, postal address, or some other verbal description of a location. A location estimate may further be defined relative to some other known location or defined in absolute terms (e.g., using latitude, longitude, and possibly altitude). A location estimate may include an expected error or uncertainty (e.g., by including an area or volume within which the location is expected to be included with some specified or default level of confidence). For purposes of the present disclosure, reference signals may include PRS, tracking reference signals (TRS), phase tracking reference signals (PTRS), cell-specific reference signals (CRS), CSI-RS, demodulation reference signals (DMRS), PSS, SSS, SSBs, SRS, etc., depending on whether the illustrated frame structure is used for uplink or downlink communication. In some examples, a collection of resource elements (REs) that are used for transmission of PRS may be referred to as a "PRS resource." The collection of resource elements may span multiple PRBs in the frequency domain and one or more consecutive symbol(s) within a slot in the time domain. In a given OFDM symbol in the time domain, a PRS resource may occupy consecutive PRBs in the frequency domain. In other examples, a "PRS resource set" may refer to a set of PRS resources used for the transmission of PRS signals, where each PRS resource may have a PRS resource ID. In addition, the PRS resources in a PRS resource set may be associated with a same TRP. A PRS resource set may be identified by a PRS resource set ID and may be associated with a particular TRP (e.g., identified by a TRP ID). In addition, the PRS resources in a PRS resource set may have a same periodicity, a common muting pattern configuration, and/or a same repetition factor across slots. The periodicity may be a time from a first repetition of a first PRS resource of a first PRS instance to the same first repetition of the same first PRS resource of the next PRS instance. For example, the periodicity may have a length selected from 2^µ*{4, 5, 8, 10, 16, 20, 32, 40, 64, 80, 160, 320, 640, 1280, 2560, 5120, 10240} slots, where µ = 0, 1, 2, 3. The repetition factor may have a length selected from {1, 2, 4, 6, 8, 16, 32} slots. A PRS resource ID in a PRS resource set may be associated with a single beam (or beam ID) transmitted from a single TRP (where a TRP may transmit one or more beams). That is, each PRS resource of a PRS resource set may be transmitted on a different beam, and as such, a "PRS resource," or simply "resource," also can be referred to as a "beam." In some examples, a "PRS instance" or "PRS occasion" may be one instance of a periodically repeated time window (such as a group of one or more consecutive slots) where PRS are expected to be transmitted. A PRS occasion also may be referred to as a "PRS positioning occasion," a "PRS positioning instance," a "positioning occasion," "a positioning instance," a "positioning repetition," or simply an "occasion," an "instance," and/or a "repetition," etc.

A positioning frequency layer (PFL) (which may also be referred to as a "frequency layer") may be a collection of one or more PRS resource sets across one or more TRPs that have the same values for certain parameters. Specifically, the collection of PRS resource sets may have a same subcarrier spacing and cyclic prefix (CP) type (e.g., meaning all numerologies supported for PDSCHs are also supported for PRS), the same Point A, the same value of the downlink PRS bandwidth, the same start PRB (and center frequency), and/or the same comb-size, etc. The Point A parameter may take the value of a parameter *ARFCN-ValueNR* (where "ARFCN" stands for "absolute radio-frequency channel number") and may be an identifier/code that specifies a pair of physical radio channel used for transmission and reception. In some examples, a downlink PRS bandwidth may have a granularity of four PRBs, with a minimum of 24 PRBs and a maximum of 272 PRBs. In other examples, up to four frequency layers may be configured, and up to two PRS resource sets may be configured per TRP per frequency layer.

The concept of a frequency layer may be similar to a component carrier (CC) and a BWP, where CCs and BWPs may be used by one base station (or a macro cell base station and a small cell base station) to transmit data channels, while frequency layers may be used by multiple (e.g., two or more) base stations to transmit PRS. A UE may indicate the number of frequency layers it is capable of supporting when the UE sends the network its positioning capabilities, such as during a positioning protocol session. For example, a UE may indicate whether it is capable of supporting one or four PFLs.

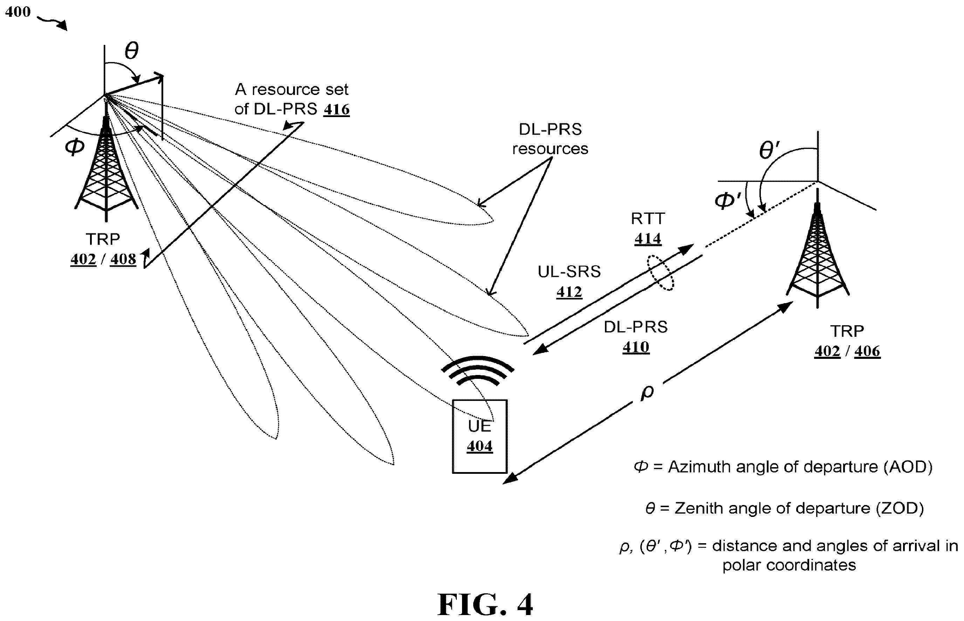

FIG. 4 is a diagram 400 illustrating an example of a UE positioning based on reference signal measurements in accordance with various aspects of the present disclosure. In one example, a location of UE 404 may be estimated based on multi-cell round trip time (multi-RTT) measurements, where multiple TRPs 402 may perform round trip time (RTT) measurements for signals transmitted to and received from the UE 404 to determine the approximate distance of UE 404 with respect to each of the multiple TRPs 402. Similarly, the UE 404 may perform RTT measurements for signals transmitted to and received from the TRPs 402 to determine the approximate distance of each TRP with respect to the UE 404. Then, based at least in part on the approximate distances of UE 404 with respect to the multiple TRPs 402, a location management function (LMF) that is associated with the TRPs 402 and/or the UE 404 may estimate the position of UE 404. For example, a TRP 406 may transmit at least one downlink positioning reference signal (DL-PRS) 410 to the UE 404, and may receive at least one uplink sounding reference signal (UL-SRS) 412 transmitted from the UE 404. Based at least in part on measuring an RTT 414 between the DL-PRS 410 transmitted and the UL-SRS 412 received, a serving base station associated with the TRP 406 or an LMF associated with the TRP 406 may identify the position of UE 404 (e.g., distance) with respect to the TRP 406. Similarly, the UE 404 may transmit UL-SRS 412 to the TRP 406, and may receive DL-PRS 410 transmitted from the TRP 406. Based at least in part on measuring the RTT 414 between the UL-SRS 412 transmitted and the DL-PRS 410 received, the UE 404 or an LMF associated with the UE 404 may identify the position of TRP 406 with respect to the UE 404. The multi-RTT measurement mechanism may be initiated by the LMF that is associated with the TRP 406/408 and/or the UE 404. A TRP may configure UL-SRS resources to a UE via radio resource control (RRC) signaling. In some examples, the UE and the TRP may report the multi-RTT measurements to the LMF, and the LMF may estimate the position of the UE based on the reported multi-RTT measurements.

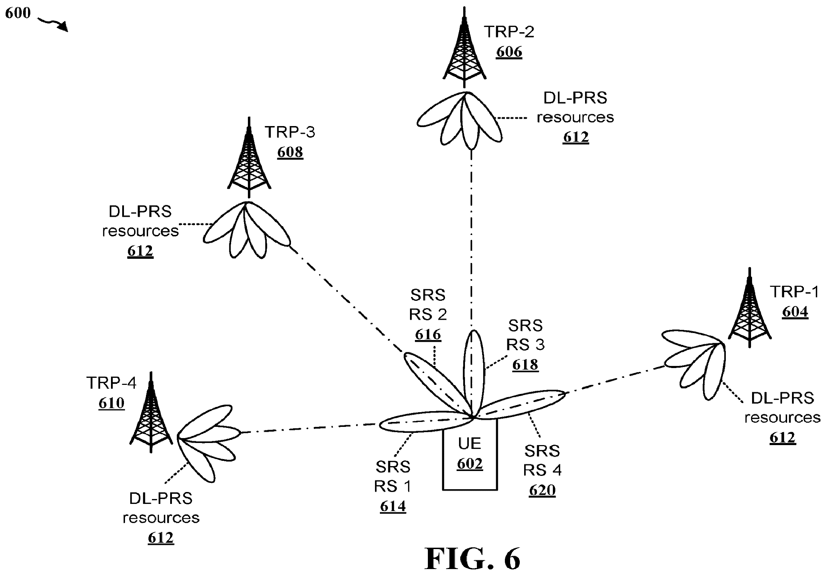

In other examples, a position of a UE may be estimated based on multiple antenna beam measurements, where a downlink angle of departure (DL-AoD) and/or uplink angle of arrival (UL-AoA) of transmissions between a UE and one or more TRPs may be used to estimate the position of the UE and/or the distance of the UE with respect to each TRP. For example, referring back to FIG. 6, with regard to the DL-AoD, the UE 404 may perform reference signal received power (RSRP) measurements for a set of DL-PRS 416 transmitted from multiple transmitting beams (e.g., DL-PRS beams) of a TRP 408, and the UE 404 may provide the DL-PRS beam measurements to a serving base station (or to the LMF associated with the base station). Based on the DL-PRS beam measurements, the serving TRP or the LMF may derive the azimuth angle (e.g., *Φ*) of departure and the zenith angle (e.g., *θ*) of departure for DL-PRS beams of the TRP 408. Then, the serving TRP or the LMF may estimate the position of UE 404 with respect to the TRP 408 based on the azimuth angle of departure and the zenith angle of departure of the DL-PRS beams. Similarly, for the UL-AoA, a position of a UE may be estimated based on UL-SRS beam measurements measured at different TRPs, such as at the TRPs 402. Based on the UL-SRS beam measurements, a serving base station or an LMF associated with the serving base station may derive the azimuth angle of arrival and the zenith angle of arrival for UL-SRS beams from the UE, and the serving base station or the LMF may estimate the position of the UE and/or the UE distance with respect to each of the TRPs based on the azimuth angle of arrival and the zenith angle of arrival of the UL-SRS beams.

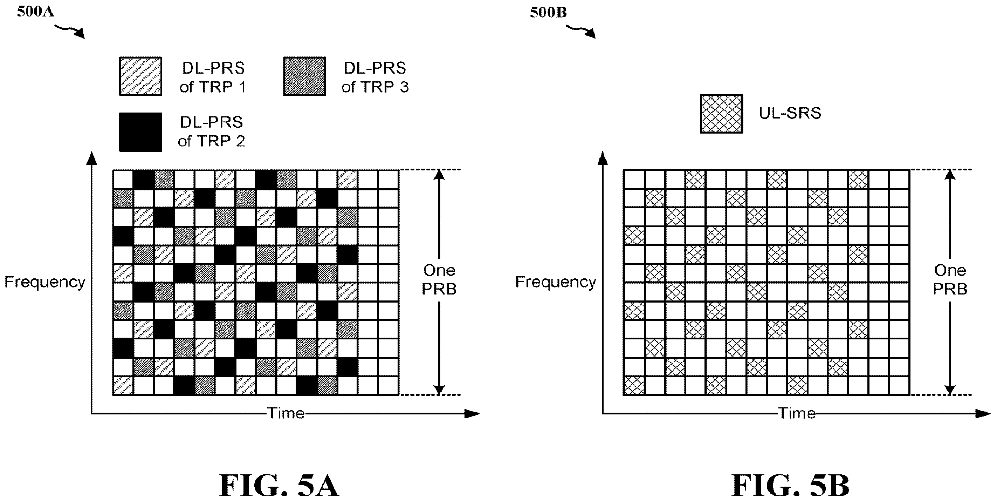

FIG. 5A is a diagram 500A illustrating an example of DL-PRS transmitted from multiple TRPs in accordance with various aspects of the present disclosure. In one example, a serving base station may configure DL-PRS to be transmitted from one or more TRPs within a slot or across multiple slots. If the DL-PRS is configured to be transmitted within a slot, the serving base station may configure the starting resource element in time and frequency from each of the one or more TRPs. If the DL-PRS is configured to be transmitted across multiple slots, the serving base station may configure gaps between DL-PRS slots, periodicity of the DL-PRS, and/or density of the DL-PRS within a period. The serving base station may also configure the DL-PRS to start at any physical resource block (PRB) in the system bandwidth. In one example, the system bandwidth may range from 24 to 276 PRBs in steps of 4 PRBs (e.g., 24, 28, 32, 36, etc.). The serving base station may transmit the DL-PRS in PRS beams, where a PRS beam may be referred to as a "PRS resource" and a full set of PRS beams transmitted from a TRP on a same frequency may be referred to as a "PRS resource set" or a "resource set of PRS," such as described in connection with FIG. 4. As shown by FIG. 5A, the DL-PRS transmitted from different TRPs and/or from different PRS beams may be multiplexed across symbols or slots.

In some examples, each symbol of the DL-PRS may be configured with a combstructure in frequency, where the DL-PRS from a TRP of a base station may occupy every *N*^{th} subcarrier. The comb value *N* may be configured to be 2, 4, 6, or 12. The length of the PRS within one slot may be a multiple of *N* symbols and the position of the first symbol within a slot may be flexible as long as the slot consists of at least *N* PRS symbols. The diagram 500A shows an example of a comb-6 DL-PRS configuration, where the pattern for the DL-PRS from different TRPs may be repeated after six (6) symbols.

FIG. 5B is a diagram 500B illustrating an example of UL-SRS transmitted from a UE in accordance with various aspects of the present disclosure. In one example, the UL-SRS from a UE may be configured with a comb-4 pattern, where the pattern for UL-SRS may be repeated after four (4) symbols. Similarly, the UL-SRS may be configured in an SRS resource of an SRS resource set, where each SRS resource may correspond to an SRS beam, and the SRS resource sets may correspond to a collection of SRS resources (e.g., beams) configured for a TRP. In some examples, the SRS resources may span 1, 2, 4, 8, or 12 consecutive OFDM symbols. In other examples, the comb size for the UL-SRS may be configured to be 2, 4, or 8.

FIG. 6 is a diagram 600 illustrating an example of estimating a position of a UE based on multi-RTT measurements from multiple TRPs in accordance with various aspects of the present disclosure. A UE 602 may be configured by a serving base station to decode DL-PRS resources 612 that correspond to and are transmitted from a first TRP 604 (TRP-1), a second TRP 606 (TRP-2), a third TRP 608 (TRP-3), and a fourth TRP 610 (TRP-4). The UE 602 may also be configured to transmit UL-SRSs on a set of UL-SRS resources, which may include a first SRS resource 614, a second SRS resource 616, a third SRS resource 618, and a fourth SRS resource 620, such that the serving cell(s), e.g., the first TRP 604, the second TRP 606, the third TRP 608, and the fourth TRP 610, and as well as other neighbor cell(s), may be able to measure the set of the UL-SRS resources transmitted from the UE 602. For multi-RTT measurements based on DL-PRS and UL-SRS, as there may be an association between a measurement of a UE for the DL-PRS and a measurement of a TRP for the UL-SRS, the smaller the gap is between the DL-PRS measurement of the UE and the UL-SRS transmission of the UE, the better the accuracy may be for estimating the position of the UE and/or the distance of the UE with respect to each TRP.

Note that the terms "positioning reference signal" and "PRS" generally refer to specific reference signals that are used for positioning in NR and LTE systems. However, as used herein, the terms "positioning reference signal" and "PRS" may also refer to any type of reference signal that can be used for positioning, such as but not limited to, PRS as defined in LTE and NR, TRS, PTRS, CRS, CSI-RS, DMRS, PSS, SSS, SSB, SRS, UL-PRS, etc. In addition, the terms "positioning reference signal" and "PRS" may refer to downlink or uplink positioning reference signals, unless otherwise indicated by the context. To further distinguish the type of PRS, a downlink positioning reference signal may be referred to as a "DL-PRS," and an uplink positioning reference signal (e.g., an SRS-for-positioning, PTRS) may be referred to as an "UL-PRS." In addition, for signals that may be transmitted in both the uplink and downlink (e.g., DMRS, PTRS), the signals may be prepended with "UL" or "DL" to distinguish the direction. For example, "UL-DMRS" may be differentiated from "DL-DMRS."

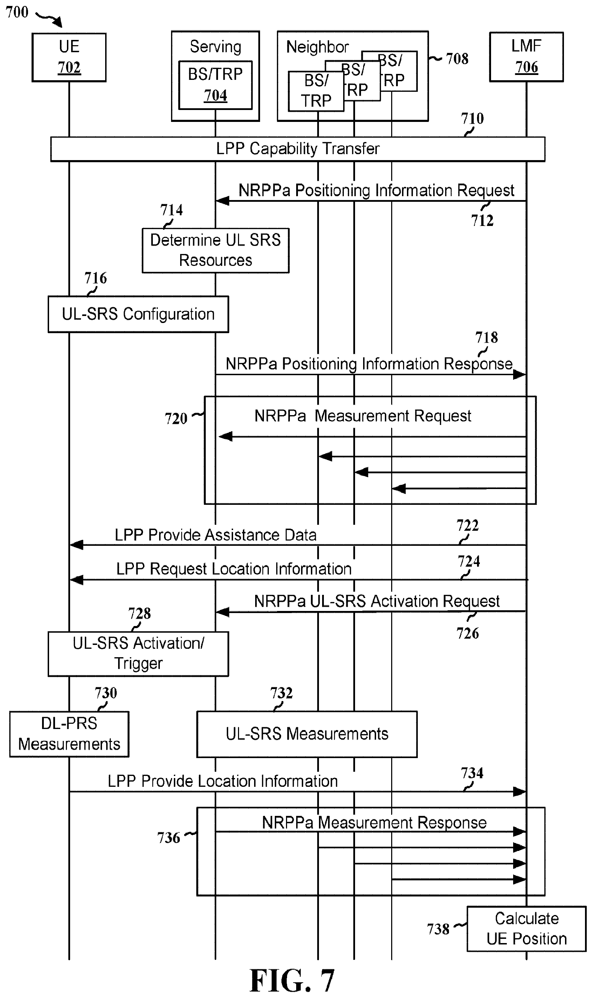

FIG. 7 is a communication flow 700 illustrating an example multi-RTT positioning procedure in accordance with various aspects of the present disclosure. The numberings associated with the communication flow 700 do not specify a particular temporal order and are merely used as references for the communication flow 700. In addition, a DL-only and/or an UL-only positioning may use a subset or subsets of this multi-RTT positioning procedure.

At 710, an LMF 706 (e.g., the LMF 185, or a network entity) may request one or more positioning capabilities from a UE 702 (e.g., from a target device). In some examples, the request for the one or more positioning capabilities from the UE 702 may be associated with an LTE Positioning Protocol (LPP). For example, the LMF 706 may request the positioning capabilities of the UE 702 using an LPP capability transfer procedure.

At 712, the LMF 706 may request UL SRS configuration information for the UE 702. The LMF 706 may also provide assistance data specified by a serving base station 704 (e.g., pathloss reference, spatial relation, and/or SSB configuration(s), etc.). For example, the LMF 706 may send an NR Positioning Protocol A (NRPPa) positioning information request message to the serving base station 704 to request UL information for the UE 702.

At 714, the serving base station 704 may determine resources available for UL SRS, and at 716, the serving base station 704 may configure the UE 702 with one or more UL SRS resource sets based on the available resources.

At 718, the serving base station 704 may provide UL SRS configuration information to the LMF 706, such as via an NRPPa positioning information response message.

At 720, the LMF 706 may select one or more candidate neighbor BSs/TRPs 708, and the LMF 706 may provide an UL SRS configuration to the one or more candidate neighbor BSs/TRPs 708 and/or the serving base station 704, such as via an NRPPa measurement request message. The message may include information for enabling the one or more candidate neighbor BSs/TRPs 708 and/or the serving base station to perform the UL measurements.

At 722, the LMF 706 may send a LPP provide assistance data message to the UE 702. The message may include specified assistance data for the UE 702 to perform the DL measurements.

At 724, the LMF 706 may send a LPP request location information message to the UE 702 to request multi-RTT measurements.

At 726, for semi-persistent or aperiodic UL SRS, the LMF 706 may request the serving base station 704 to activate/trigger the UL SRS in the UE 702. For example, the LMF 706 may request activation of UE SRS transmission by sending an NRPPa positioning activation request message to the serving base station 704.

At 728, the serving base station 704 may activate the UE SRS transmission and send an NRPPa positioning activation response message. In response, the UE 702 may begin the UL-SRS transmission according to the time domain behavior of UL SRS resource configuration.

At 730, the UE 702 may perform the DL measurements from the one or more candidate neighbor BSs/TRPs 708 and/or the serving base station 704 provided in the assistance data. At 732, each of the configured one or more candidate neighbor BSs/TRPs 708 and/or the serving base station 704 may perform the UL measurements.

At 734, the UE 702 may report the DL measurements to the LMF 706, such as via an LPP provide location information message.

At 736, each of the one or more candidate neighbor BSs/TRPs 708 and/or the serving base station 704 may report the UL measurements to the LMF 706, such as via an NRPPa measurement response message.

At 738, the LMF 706 may determine the RTTs from the UE 702 and BS/TRP Rx-Tx time difference measurements for each of the one or more candidate neighbor BSs/TRPs 708 and/or the serving base station 704 for which corresponding UL and DL measurements were provided at 734 and 736, and the LMF 706 may calculate the position of the UE 702.

For a UE positioning session based on multi-RTT, a UE and one or more TRPs may measure and report their Rx-Tx timing difference to a location server (e.g., an LMF) separately. The report may include time-stamps (e.g., SFN and/or slot number) at which the measurements for the Rx-Tx timing difference are performed, which may be based on which RTT is to be computed between the UE and the one or more TRPs. In some examples, the Rx-Tx timing difference may be specified to be with a range of plus-minus (+/-) 500 us (e.g., for a quantization of 21 bits with a step size of Tc=0.5ns), and the corresponding time stamp may be limited within a duration of 10.24 seconds. Thus, UL and DL measurements may be performed at a different time by the UE and/or the one or more TRPs.

In some scenarios, a positioning procedure may be associated with a non-terrestrial network (NTN). In some examples, an NTN may refer to a network, or segments of a network, using at least one airborne device (e.g., an aircraft) or satellite (e.g., a low earth orbit (LEO) satellite, a medium earth orbit (MEO) satellite, a geostationary earth orbit (GEO) satellite, a high elliptical orbit (HEO) satellite, and/or a high-altitude pseudo satellite (HAPS), etc.) for transmission. For example, an NTN may support direct communications between a UE (e.g., a handset, a mobile device, a mobile phone, etc.) and a satellite (e.g., an LEO satellite, or a GEO satellite, etc.), where the UE may transmit text messages and/or voice services to another UE via the satellite. In some aspects, determining a position of a UE may be an important factor for an NTN. For example, location information of a UE may be used in a random access network (RAN) for an initial synchronization, uplink timing and frequency precompensation, mobility, and/or handover, etc. In addition, an NTN may support different types of UEs, such as UEs with global navigation satellite system (GNSS) support (e.g., the positions of the UEs may be determined via global positioning system (GPS)) and/or UEs without GNSS support.

One advantage of a UE performing a positioning session with an NTN over GNSS (e.g., with GNSS support) is that the communication link between the UE and a satellite may enable the UE to interact with the satellite. For example, the PRS signals transmitted from a satellite may be tailored to or configured for a specific user or a specific device. As such, the performance and/or the accuracy of a positioning of a UE based on GNSS (e.g., based on GPS) may further be supplemented with the assistance of an NTN as the UE and/or the satellite may exchange positioning related information with each other.

On the other hand, a UE may also perform a positioning session with an NTN without GNSS support. For examples, for UEs without GNSS support, the network-based positioning methods and mechanisms discussed in connection with FIGs. 4 to 6 (e.g., multi-RTT and/or OTDOA, etc.) may also be used for determining the location of the UE. For purposes of the present disclosure, an NTN may include just NTN cell(s), or a mix of NTN cell(s) and ground cell(s). As such, for a positioning operation associated with an NTN, the positioning operation may involve NTN cell(s) without ground cell(s), a mix of NTN and ground cells, and/or hybrid solutions involving NTN cells, ground cells, GNSS satellites, and/or other ground based positioning reference points such as WiFi, Bluetooth, etc.

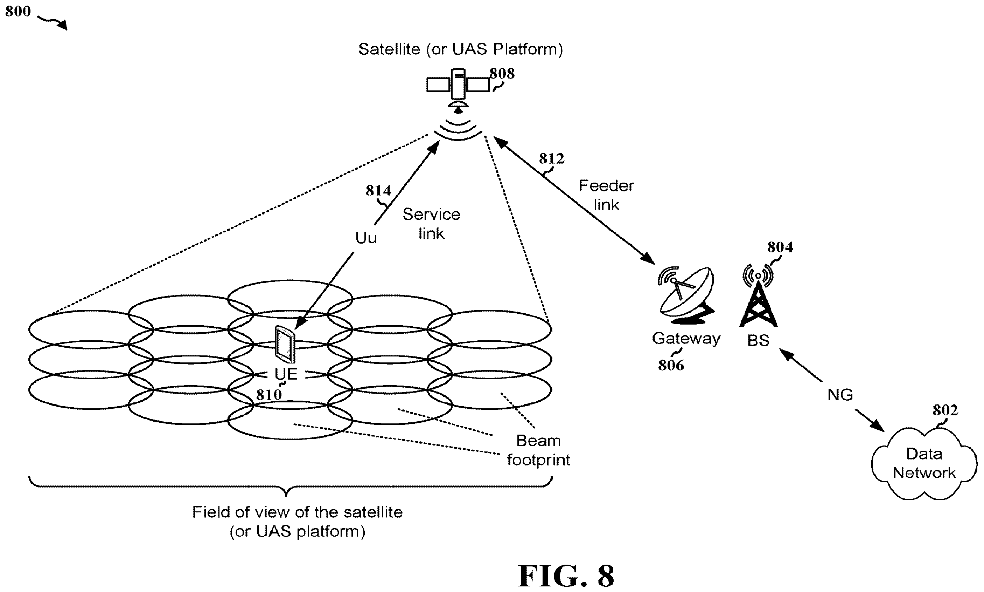

FIG. 8 is a diagram 800 illustrating an example of an NTN architecture based on transparent payload in accordance with various aspects of the present disclosure. A data network 802 (e.g., a 5G core (5GC) network) may connect to a base station 804 (e.g., an gNB) via a communication interface (e.g., a next generation (NG) interface). The base station 804 may be located on the ground and connected to an NTN gateway 806, where the NTN gateway 806 may be connected to an NTN payload 808 (e.g., a network node embarked onboard a satellite, an unmanned aircraft systems (UAS), or HAPS, etc.) via a feeder link 812. The NTN payload 808 may connect to a UE 810 via a service link 814 (e.g., using the UE-UTRAN (Uu) interface). Under the transparent payload NTN architecture, the base station 804 may be a ground station and the NTN payload 808 (e.g., the satellite) may function like a relay, where the NTN payload 808 may provide radio frequency filtering, frequency conversion, and/or amplification for data/payload received from the base station 804 via the NTN gateway 806 and relay/transmit the data/payload to the UE 810. As such, the waveform signal relayed/repeated by the NTN payload 808 may be un-changed. In some examples, the ground area(s) covered by the NTN payload 808 may be referred to as "footprint(s)" and/or "beam footprint(s)." The footprint of a satellite may be a ground area in which its transponders offer coverage, and the footprint may also determine the satellite dish diameter for receiving each transponder's signal. In some examples, there may be a different coverage map for each transponder (or group of transponders), as each transponder may be configured to cover different areas. **Table 1** below shows examples of altitudes and footprint sizes for different types of satellite platforms, where different satellite platforms may have different distance, delay, and/or coverage on the earth.

**Table 1 - example altitudes and footprint sizes for different types of satellite platforms**

| **Platforms** | **Altitude Range** | **Orbit** | **Typical Beam Footprint Size** |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (LEO) satellite | 35786 km | Notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

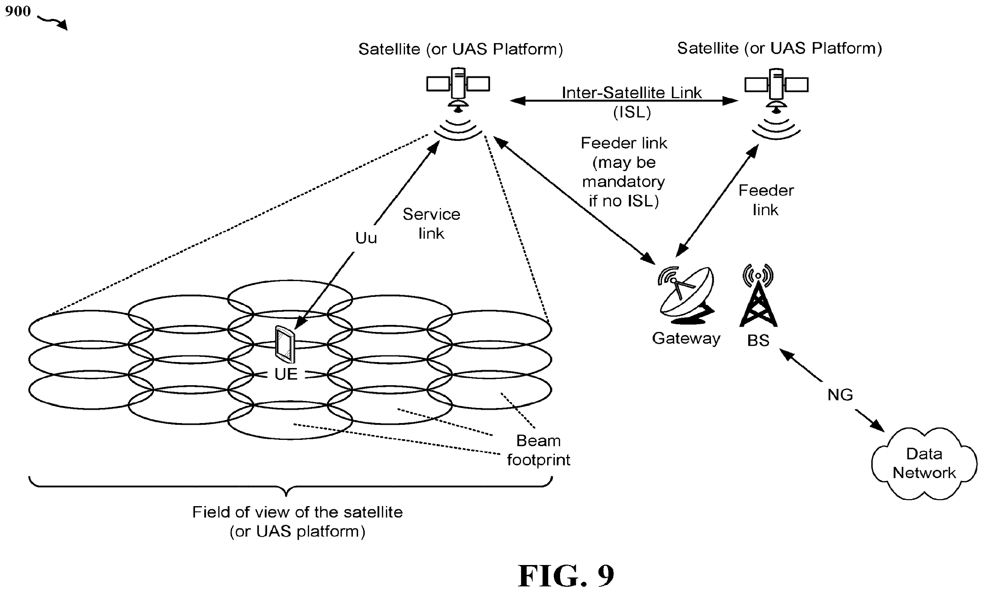

FIG. 9 is a diagram 900 illustrating an example of an NTN architecture based on regenerative payload in accordance with various aspects of the present disclosure. In some examples, an NTN network may include at least one satellite with a regenerative payload, enabling the satellite to be a distributed unit (DU), or a full base station supporting a satellite-enabled new radio, radio access network (NR-RAN). For example, for a satellite with regenerative payload, the satellite may regenerate incoming signals with signal-processing techniques such as demodulation, decoding, switching, encoding, and modulation before transmission, which may improve division of spectrum. In addition, a satellite with a regenerative payload may include on-board processing (e.g., a digital transparent processor (DTP) or a fully regenerative (FR) transponder). In some examples, inter-satellite links (ISLs) may be established between satellites with regenerative payloads for communications, which may increase the geographical coverage of the receiving ground station/user terminal.

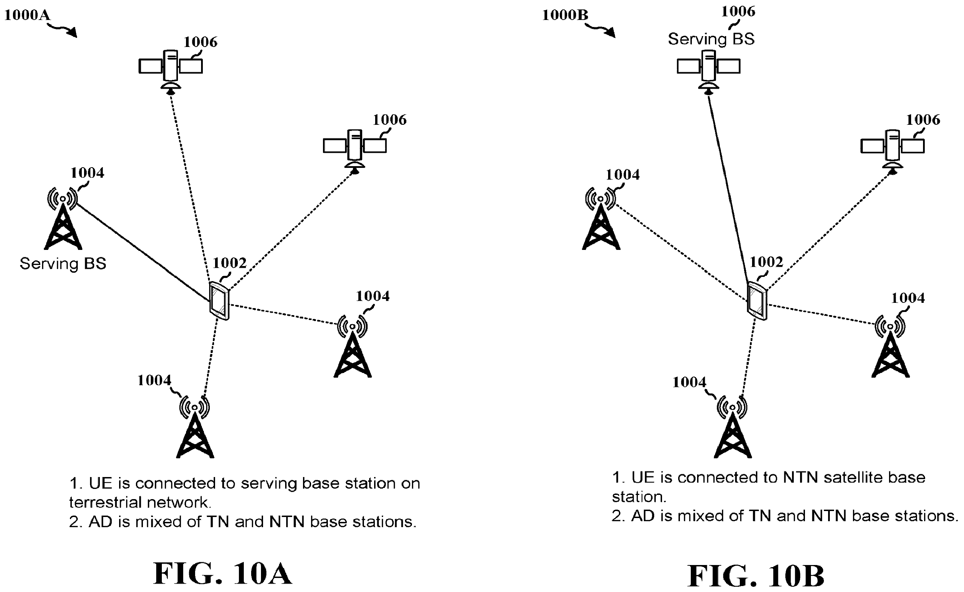

In some examples, a communication network may include both an NTN and a terrestrial network (TN). In other words, a segment of a communication network may include non-terrestrial device(s) (e.g., NTN base stations) and another segment of the communication work may include terrestrial device(s) (e.g., TN/ground base stations). For example, FIGs. 10A and 10B are diagrams 1000A and 1000B illustrating examples of a network that includes both NTN and TN devices in accordance with various aspects of the present disclosure. A network may include one or more TN devices 1004 (e.g., ground base stations and/or TRPs) and one or more NTN devices 1006 (e.g., satellites and/or aircrafts), where a UE 1002 in a positioning session may transmit or receive signals (e.g., PRSs, SRSs, etc.) with both TN devices 1004 and NTN devices 1006, such as described in connection with FIGs. 6 and 7. In some examples, as shown by the diagram 1000A, a serving base station may be a TN base station, such that the UE 1002 may connect to the serving base station via a TN network. In other examples, as shown by the diagram 1000B, the serving base station may be an NTN satellite base station, such that the UE 1002 may connect to the NTN satellite base station via an NTN network. In both scenarios, the assistance data (AD) associated with the UE positioning session may include a mixed of TN and NTN base stations. For purposes of the present disclosure, a base station that is associated with an NTN device (e.g., a satellite, an aircraft, or an UAS platform, etc.) may be referred to as an "NTN base station," an "NTN satellite base station," and/or an "NTN base station satellite." On the other hand, a base station that is located on the earth may be referred to as an "TN base station" and/or a "terrestrial base station."

Each NTN base station may move with different speeds, and the coverage of the NTN base station on the earth may keep on changing. In some examples, the change in the NTN base station may be deterministic and known at an LMF level. For example, **Table 2** below shows examples of NTN scenarios versus delay constraints:

**Table 2 - Examples of NTN scenarios versus delay constraints**

| **NTN scenarios** | **A** | **B** | **C1** | **C2** | **D1** | **D2** |
|---|---|---|---|---|---|---|
| | GEO transparent payload | GEO regenerative payload | LEO transparent payload | | LEO regenerative payload | |
| Satellite altitude | 35786 km | | 600 km | | | |
| Relative speed of Satellite with respect to earth | negligible | | 7.56 km per second | | | |
| Min elevation for both feeder and service links | 10° for service link and 10° for feeder link | | | | | |
| Typical Min / Max NTN beam foot print diameter (note 1) | 100 km / 3500 km | | 50 km / 1000 km | | | |
| Maximum propagation delay contribution to the Round Trip Delay on the radio interface between the gNB and the UE | 541.46 ms (Worst case) | 270.73 ms | 25.77 ms | | 12.89 ms | |
| Minimum propagation delay contribution to the Round Trip Delay on the radio interface between the gNB and the UE | 477.48 ms | 238.74 ms | 8 ms | | 4 ms | |
| Maximum Delay variation as seen by the UE (note 2) | Negligible | | Up to +/- 93.0 µs/sec (Worst case) | | Up to +/- 47.6 µs/sec | |
| NOTE 1: The beam foot print diameter is indicative. The diameter depends on the orbit, earth latitude, antenna design, and radio resource management strategy in a given system. | | | | | | |
| NOTE 2: The delay variation measures how fast the round trip delay (function of UE-satellite-NTN gateway distance) varies over time when the satellite moves towards/away from the UE. It is expressed in µs/s and is negligible for GEO scenario | | | | | | |
| NOTE 3: Void | | | | | | |
| NOTE 4: Speed of light used for delay calculation is 299792458 m/s. | | | | | | |

As described in connection with FIGs. 8 and 9, a satellite may communicate with a ground device (e.g., a UE) via multiple satellite beams, where different satellite beams may cover different areas (e.g., have different beam footprints). In some examples, a set of satellite beams may be associated with (or mapped to) a same physical cell identity (PCI). In other examples, each satellite beam may be associated with one PCI. A PCI may be used to indicate the physical layer identity of a cell. For example, the PCI may be used for cell identity during a cell selection procedure.

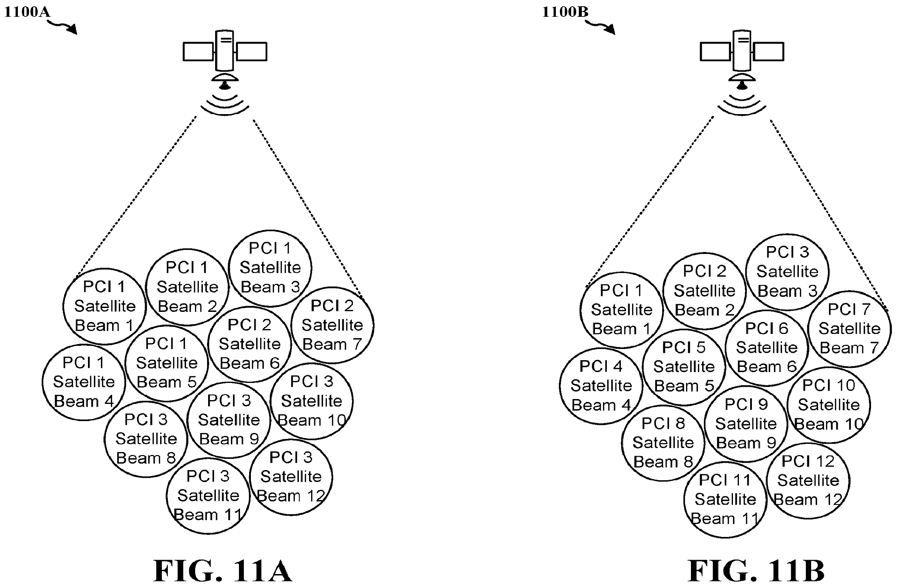

FIG. 11A is a diagram 1100A illustrating an example of mapping a same PCI for multiple satellite beams in accordance with various aspects of the present disclosure. A satellite may include 12 beams (e.g., beam 1 to beam 12), where beam 1 to beam 5 may be associated with a first PCI (PCI 1), beam 6 and beam 7 may be associated with a second PCI (PCI 2), and beam 8 to beam 12 may be associated with a third PCI (PCI 3), etc. FIG. 11B is a diagram 1100B illustrating an example of mapping one PCI per satellite beam in accordance with various aspects of the present disclosure. A satellite may include 12 beams, where each beam may correspond to one PCI. For example, a first satellite beam (beam 1) may be associated with a first PCI (PCI 1), a second satellite beam (beam 2) may be associated with a second PCI (PCI 2), etc. As such, 12 satellite beams may be associated with 12 PCIs. In some examples, a satellite beam may include one or more SSB beams, and one cell (e.g., one PCI) may include a maximum of L SSB beams, where L may be 4, 8, or 64 depending on the bandwidth. Similar to TN (e.g., a ground base station), one or several SSB index may be used per PCI to separate SSB transmission on different beams.

A satellite (e.g., an NTN satellite) may constantly be moving at a high speed, and the speed of the satellite with respect to a UE may be based on the satellite orbit. For example, as shown by Table 2, a LEO satellite may be moving up to 7.56 km per second. An NTN satellite (e.g., an NTN satellite with on-board processing) may include beam forming capabilities so that it is capable of covering different regions with different beams. For example, an NTN satellite base station may have a maximum of 64 beams or cells, and each cell may have a maximum of L SSB beams, where L can be 4, 8 or 64 depending on the band. In some scenarios, an LMF may configure an AD based on last loose estimation of UE fix. However, in some cases, a UE may not be able to detect or see any cell(s)/beam(s) from one ore many satellites, which may be due to the AD is not optimal as the UE location is not known with good confidence, due to satellite movement, and/or due to UE movement, etc. As such, the UE may be configured to measure all beams/cells from an NTN satellite to determine whether the UE is able to decode the NTN satellite, and the UE may measure all beams/cells based on a priority of measurement order. For example, referring back to FIG. 11B, if an NTN satellite is transmitting 12 beams (which may also be referred to as "cells") that map to 12 PCIs, a priority of measurement order may be defined may for this NTN satellite (e.g., by an LMF), such as to measure all PCIs starting from PCI 1 to PCI 12. Based on the priority of measurement order, the UE may be specified to search and measure for all 12 beams of the NTN satellite before the UE is able to declare whether the UE is able to decode the NTN satellite, which may have a significant power impact to the UE. For example, if the NTN satellite has 64 beams, the UE may be specified to decode all 64 beams to determine that it is unable to decode the NTN satellite.

Aspects presented herein may improve power saving and communication latency between a UE and a base station, such as an NTN base station. Aspects presented herein may enable a UE to measure beams/cells of an NTN satellite in a more efficient manner to reduce power consumption of the UE during beam/cell measurements. For example, in one aspect of the present disclosure, an NTN satellite may include a wide beam that covers a larger area (e.g., the full area of the satellite), and the NTN satellite may also include multiple narrow beams that cover a specific area within the wide beam coverage. In other words, the narrow beams may be overlapped and within the wide beam. In some examples, some of the narrow beams may also overlap with other narrow beams. In one example, a UE that is attempting to communicate with the NTN satellite may be configured to first measure the wide beam (e.g., reference signal transmitted from the wide beam) of the NTN satellite before measuring any of the narrow beams. Then, based on whether the UE is able to decode the wide beam successfully, the UE may determine whether to measure the narrow beams to conserve UE power. For example, if the UE is able to decode the wide beam and/or the wide beam has a beam measurement above a threshold, the UE may continue to measure one or more narrow beams, such as described in connection with FIGs. 11A and 11B. On the other hand, if the UE is unable to decode the wide beam or the wide beam has a beam measurement below a threshold, the UE may refrain from measuring any of the narrow beams. This may prevent the UE from spending additional or unnecessary power when an NTN satellite or base station is not visible to the UE.

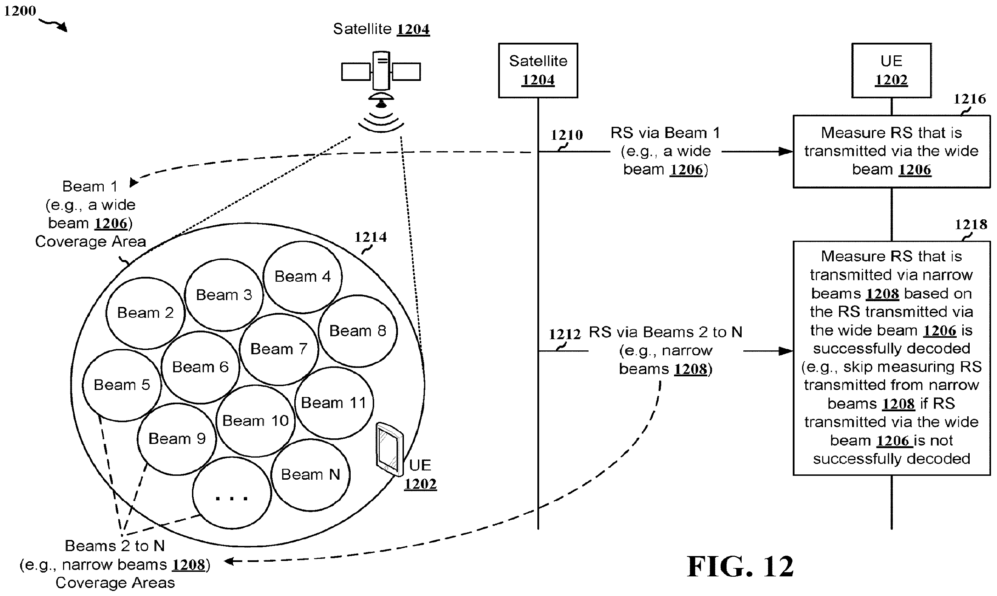

FIG. 12 is a communication flow 1200 illustrating an example of an NTN satellite configured with a wide beam and multiple narrow beams in accordance with various aspect of the present disclosure. The numberings associated with the communication flow 1200 do not specify a particular temporal order and are merely used as references for the communication flow 1200.

In one example, as shown at 1210, a satellite 1204 (e.g., an NTN satellite or an NTN satellite base station) may transmit a reference signal (RS) via a wide beam 1206, and as shown at 1212, the satellite may also transmit reference signals via a plurality of narrow beams 1208. In one aspect, the wide beam 1206 may cover a larger area compare to the area covered by each of plurality of narrow beams 1208, which may be the full or maximum area for which the satellite 1204 is able to cover. For example, as shown at 1214, the wide beam 1206 (beam 1) may cover a larger area, and each of the plurality of narrow beams 1208 (beam 2 to beam N) may cover a specific within the wide beam coverage. As such, the plurality of narrow beams 1208 may be overlapped with the wide beam 1206. The RS from the wide beam 1206 may be transmitted at the same time and/or interval as the RS from the plurality of narrow beams 1208, or it may be transmitted at a different time and/or interval from the RS from the plurality of narrow beams 1208. In some examples, some of the plurality of narrow beams 1208 may also overlap with other narrow beam(s) in the plurality of narrow beams 1208. For purposes of the present disclosure, a "wide beam" or a "wider beam" may refer to a beam having a larger beam width compared to a "narrow beam" with similar boresight directions. As such, a "narrow beam" or a "narrower beam" may refer to a beam having a smaller beam width compared to a wide beam with similar boresight directions. In other words, a wide beam may cover a large geographic region that includes the smaller geographic regions of each of the narrow beams.

At 1216, a UE 1202 that is attempting to communicate with the satellite 1204 may first measure the RS that is transmitted via the wide beam 1206 of the satellite 1204, and the UE may determine whether to measure the RS that is transmitted via the plurality of narrow beams 1208 based on the decoding result and/or the measurement result of the RS transmitted via the wide beam 1206. For example, if the UE 1202 is unable to decode the RS transmitted via the wide beam 1206, or the UE 1202 is able to decode the RS transmitted via the wide beam 1206 but the RS measurement (e.g., the signal strength, signal-to-noise ratio (SNR), etc.) is below a threshold, the UE 1202 may skip or refrain from measuring RS that is transmitted via the plurality of narrow beams 1208. As the wide beam 1206 is configured to cover areas that are covered by the plurality of narrow beams 1208, if the UE 1202 is unable to decode the wide beam 1206, it is likely that the UE 1202 may not be able to decode the plurality of narrow beams 1208 as well. As such, by skipping or refraining from measuring or decoding the plurality of narrow beams 1208 if the UE 1202 is unable to decode the wide beam 1206, the power consumption at the UE 1202 may be reduced.

On the other hand, as shown at 1218, if the UE 1202 is able to decode the RS transmitted via the wide beam 1206 and/or beam measurement(s) for the RS transmitted via the wide beam 1206 is above a threshold, then the UE 1202 may proceed with measuring the RS transmitted from one or more of the plurality of narrow beams 1208, which may be based on a priority of measurement order defined for the satellite 1204 as described in connection with FIG. 11A and 11B. For example, as shown by FIG. 11A, a first set of narrow beams may correspond to a first PCI, a second set of narrow beams may correspond to a second PCI, and an M^{th} set of narrow beams may correspond to an M^{th} PCI, etc. Then, a priority of measurement order associated with the satellite 1204 may indicate the UE 1202 to measure narrow beams starting from narrow beams associated with the first PCI to the narrow beams associated with the last (e.g., M^{th}) PCI. In another example, as shown by FIG. 11B, each of the plurality of narrow beams 1208 may correspond to one PCI, such that narrow beams 2 to N may correspond to PCIs 1 to N-1. Then, a priority of measurement order associated with the satellite 1204 may indicate the UE 1202 to measure the plurality of narrow beams 1208 starting from the first PCI to the last (e.g., N-1^{th}) PCI. In some examples, the UE 1202 may determine to communicate with the satellite 1204 based on a UE positioning session established by an LMF.

In one aspect of the present disclosure, there may be more than one wide beam configured for the satellite 1204, and each wide beam may cover a subset of narrow beams. For example, the satellite 1204 may include a first wide beam that covers narrow beams 2 to 4, a second wide beam that covers narrow beams 5 to 9, and a third wide beam that covers narrow beams 10 to N, etc.

In another aspect of the present disclosure, the wide beam 1206 may be configured with a lower resource configuration compared to the plurality of narrow beams 1208. For example, the wide beam 1206 may be configured with a different or a simpler (e.g., less dense) comb pattern for transmitting an RS (e.g., a PRS) compared to the comb pattern used for transmitting the RS via the plurality of narrow beams 1208. In another example, the wide beam 1206 may be configured with a different or a shorter duration for transmitting an RS compared to the duration of transmitting the RS via the plurality of narrow beams 1208. For example, the wide beam 1206 may transmit the RS using some symbols of a slot (e.g., transmitting the RS at symbol level), whereas the plurality of narrow beams 1208 may transmit the RS using the full slot (e.g., transmitting the RS at slot level). In another example, the wide beam 1206 may be configured with a different or a narrower bandwidth (BW) for transmitting an RS compared to the BW of transmitting the RS via the plurality of narrow beams 1208. In another example, the wide beam 1206 may be configured with a different or a smaller/shorter periodicity and/or repetition factor for transmitting an RS compared to the BW of transmitting the RS via the plurality of narrow beams 1208. For example, the wide beam 1206 may be configured to transmit the RS at every 100 ms and/or with a repetition factor of two (2), whereas the plurality of narrow beams 1208 may be configured to transmit the RS at every 20 ms and/or with a repetition factor of four (4), etc. In some examples, the UE 1202 may include the capability to detect the presence of the satellite 1204 (or an NTN base station) with this lower resource configuration.

In another aspect of the present disclosure, as shown at 1214, footprints of the plurality of narrow beams 1208 may be a subset of the wide beam 1206. In addition, the plurality of narrow beams 1208 may be configured with higher-overhead positioning configurations. For example, the satellite 1204 may transmit the RS via the plurality of narrow beams 1208 using more resources compared to transmitting the RS via the wide beam 1206, such as transmitting the RS using more bandwidth and/or with shorter periodicity, etc.

In another aspect of the present disclosure, the priority of measuring the wide beam 1206 before measuring the plurality of narrow beams 1208, and/or the priority of measuring beams in the plurality of narrow beams 1208 may be defined for the UE 1202 by an LMF via assistance data (AD). For example, the LMF may define the wide beam 1206 as high priority resources in the AD. In addition, if there are multiple wide beams, all of the wide beams may be configured with high priority resources compared to the narrow beams. Similarly, the LMF may define the plurality of narrow beams 1208 as low priority resources compare to wide beam in the AD. In some examples, the resources for transmitting the RS via the wide beam 1206 and the plurality of narrow beams 1208 may be included in a PRS resource set having multiple PRS resources. As such, PRS resources in the PRS resource set that are used by the wide beam 1206 for transmitting PRS may be associated with a higher priority, and PRS resources in the PRS resource set that are used by the plurality of narrow beams 1208 for transmitting PRS may be associated with a lower priority.

In some examples, the condition of whether a UE (e.g., the UE 1202) is to decode the plurality of narrow beams 1208 may be known or may not be known by the UE. For example, a UE may be aware of the wide beam(s) and narrow beam(s) configuration associated with the satellite 1204 based on the wide beam(s) and narrow beam(s) information provided to the UE by an LMF. In addition, the LMF may also provide associations between the wide beam(s) and the narrow beam(s). For example, the LMF may indicate that the first wide beam X may include four (4) narrow beams X1, X2, X3, and X4, and the second wide beam Y may include three (3) narrow beams Y1, Y2, and Y3, etc. Then, as described in connection with 1216 and 1218 of FIG. 12, the LMF may indicate to the UE that the UE is to decode the wide beam first, and if the wide beam is successful decoded, the UE may decode the corresponding narrow beams define in the associations. On the other hand, if the UE is unable to decode a wide beam (or the decoded wide beam has a beam measurement below a threshold), the UE may be configured not to decode the narrow beams associated with the wide beam.

In another example, a UE may not be aware of the wide beam(s) and narrow beam(s) configuration associated with the satellite 1204 or the UE does not have the capability to differentiate between the wide beam(s) and the narrow beam(s). In such an example, an LMF may provide the UE with a list of M PRS resources to be measured with a priority order for each NTN satellite/base station instead. Then, the LMF may indicate to the UE that the UE is to measure a minimum of N PRS resources in the list for a specific NTN satellite or for each NTN satellite. For example, if N = 1, the UE is to measure at least one PRS resource in the list of PRS resources, and if N = 2, the UE is to measure at least two PRS resources in the list of PRS resources, etc. If the UE is able to decode any PRS resource within the N PRS resource(s), the UE may decode rest of the PRS resources in the list (e.g., rest of the M-N PRS resources). For example, if the list includes ten (10) PRS resources (e.g., M = 10) and the UE is specified to measure at least three PRS resources within the list (e.g., N = 3), the UE may first measure three PRS resources in the list. If the UE is able to decode one or more of the three PRS resources, the UE may continue to decode and measure the rest seven (7) (e.g., M - N = 10 - 3 = 7) PRS resources in the list. However, if the UE is not able to decode any PRS resource within the N PRS resources, the UE may skip or refrain from decoding the rest of the M-N PRS resources to conserve UE power. In some examples, when N = 1, the UE may use the decoding result of one PRS resource to determine whether an NTN satellite is presented or not to improve the communication efficiency.

In another aspect of the present disclosure, when the satellite 1204 includes the wide beam 1206 and the plurality of narrow beams 1208 configuration, an LMF may perform a UE positioning session associated with the satellite 1204 in multiple phases to improve the efficiency of the UE positioning session. For example, in a first phase, the LMF may provide the configuration for just the wide beam 1206 to the UE 1202, and the UE 1202 may measure the wide beam 1206 based on the configuration, as described in connection with 1216 of FIG. 12. Then, the UE 1202 may report the wide beam measurement and/or the wide beam decoding result (e.g., successful or unsuccessful) to the LFM. Based at least in part on the wide beam measurement and/or the wide beam decoding result, the LMF may be able to locate the UE with certain positioning error and/or confidence. In a second phase, the LMF may select one or more narrow beam(s) for the UE 1202 to measure based on the wide beam measurement and/or the wide beam decoding result, where the narrow beam(s) select may enable the UE 1202 and/or the LMF to perform a more precise positioning. By performing NTN satellite measurements in multiple phases, additional power saving may be achieved by a UE as the UE may avoid measuring all narrow beams. In addition, the latency for the UE positioning sessions may also be improved.

In some scenarios, a UE may receive a plurality of PRS resources from multiple TRPs via one or more PFLs, where some or all of the multiple TRPs may be NTN base stations. In some cases, the UE may not have capabilities to process all of the plurality of PRS resources. As such, in some examples, a network entity may configure one or more prioritization rules for the UE to prioritize measurements of PRS resources. Thus, based on the configured prioritization rule(s), the UE may measure a subset of a plurality of PRS resources, and the UE may skip measuring another subset of the plurality of PRS resources.

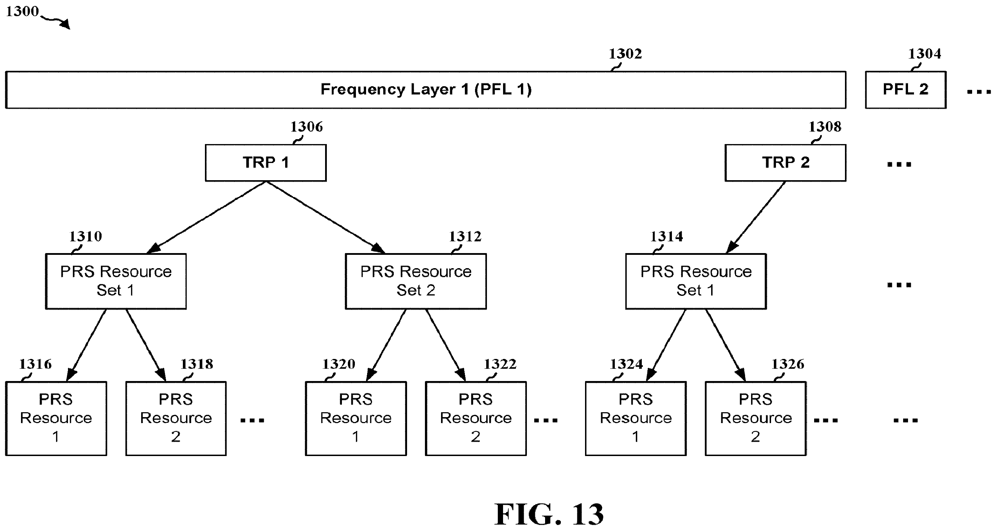

FIG. 13 is a diagram 1300 illustrating an example PRS resource measurement prioritization in accordance with various aspects of the present disclosure. A UE may be configured with a number of PRS resources in a UE positioning session (e.g., via assistance data). For example, as shown by the diagram 1300, the UE may be configured to receive DL PRSs from a first frequency layer 1302 (PFL 1) and a second frequency layer 1304 (PFL 2). The first frequency layer 1302 may include DL PRSs transmitted from a first TRP 1306 and a second TRP 1308, where the first TRP 1306 may transmit PRSs using a first PRS resource 1316 and a second PRS resource 1318 in a first PRS resource set 1310, and using a first PRS resource 1320 and a second PRS resource 1322 in a second PRS resource set 1312, and the second TRP 1308 may transmit PRSs using a first PRS resource 1324 and a second PRS resource 1326 in a first PRS resource set 1314. Similarly, the UE may also receive DL PRSs from the second frequency layer 1304 via multiple TRPs, PRS resource sets, and/or PRS resources.

In one example, if the UE does not have the capability to process all the configured PRS resources, the UE may be configured to receive or measure the PRSs received from the first frequency layer 1302 first before processing PRSs in the second frequency layer 1304 (e.g., PRSs are processed/measured based on PFL 1 > PFL 2). If the UE does not have the capability to process/measure PRSs in a frequency layer, the UE may skip measuring the PRSs in that frequency layer. For example, if the UE is configured to receive the PRSs via the first frequency layer 1302 and the second frequency layer 1304 but the UE is just able to process/measure PRSs in the first frequency layer 1302, the UE may skip PRS measurements for the second frequency layer 1304. Similarly, within a frequency layer, if the UE does not have the capability to process all the PRSs in the frequency layer, the UE may prioritize its PRS measurements based on the priorities associated with the TRPs. For example, the UE may be configured to receive or measure the PRSs received from the first TRP 1306 before processing PRSs from the second TRP 1308 (e.g., PRSs are processed/measured based on TRP 1 > TRP 2 in a frequency layer). If the UE does not have the capability to process/measure PRSs from a TRP, the UE may skip measuring the PRSs in that TRP. For example, if the UE is configured to receive the PRSs via the first TRP 1306 and the second TRP 1308 via the first frequency layer 1302 but the UE is just able to process/measure PRSs in the first TRP 1306, the UE may skip PRS measurements for the second TRP 1308. Furthermore, within a TRP, if the UE does not have the capability to process all the PRSs in that TRP, the UE may prioritize its PRS measurements based on the priorities associated with the PRS resource sets. For example, the UE may be configured to receive or measure the PRSs received from the first PRS resource set 1310 first before processing PRSs from the second PRS resource set 1312 (e.g., PRSs are processed/measured based on PRS resource set 1 > PRS resource set 2 in a TRP). If the UE does not have the capability to process/measure PRSs in a PRS resource set, the UE may skip measuring the PRSs in that PRS resource set. For example, if the UE is configured to receive the PRSs via the first PRS resource set 1310 and the second PRS resource set 1312 from the first TRP 1306 but the UE is just able to process/measure PRSs in the first PRS resource set 1310, the UE may skip PRS measurements for the second PRS resource set 1312. Lastly, within a PRS resource set, if the UE does not have the capability to process all the PRSs in that PRS resource set, the UE may prioritize its PRS measurements based on the priorities associated with the PRS resources. For example, the UE may be configured to receive or measure the PRSs received from the first PRS resource 1316 first before processing PRSs from the second PRS resource 1318 (e.g., PRSs are processed/measured based on PRS resource 1 > PRS resource 2 in a PRS resource set). If the UE does not have the capability to process/measure PRSs in a PRS resource, the UE may skip measuring the PRSs in that PRS resource. For example, if the UE is configured to receive the PRSs via the first PRS resource 1316 and the second PRS resource 1318 of the first PRS resource set 1310 but the UE is just able to process/measure PRSs in the first PRS resource 1316, the UE may skip PRS measurements for the second PRS resource 1318.

As such, if a UE is configured with multiple PRS resources via multiple frequency layers, multiple TRPs, multiple PRS resource sets, and/or multiple PRS resources, the UE may sort the frequency layers (e.g., may be up to four frequency layers) according to a priority, sort the TRPs per frequency layer (e.g., may be up to sixty four (64) TRPs per frequency layer) also according to a priority, sort the PRS resource sets per TRP (e.g., may be up to two resource sets per TRP) according to a priority, and/or sort the PRS resource per PRS resource set (e.g., may be up to sixty four (64) PRS resources per PRS resource set). In other words, within a positioning frequency layer, the DL PRS resources may be sorted in the decreasing order of priority for measurement to be performed by the UE, with the reference indicated by *nr-DL-PRS-ReferenceInfo* being the highest priority for measurement, and the following priority is assumed: (1) up to 64 *dl-PRS-ID*s of the frequency layer are sorted according to priority; and (2) up to 2 DL PRS resource sets per *dl-PRS-ID* of the frequency layer are sorted according to priority.

As shown by Table 1, the distance between an NTN base station and a UE may be much longer compared to the distance between a TN (e.g., ground) base station and the UE. Thus, in one aspect of the present disclosure, to improve UE positioning, a UE may be configured with PFL(s) that are dedicated to the NTN base station(s) and PFL(s) that are dedicated to TN base station(s). In other words, NTN base station(s) may be configured to with PFL(s) that are different from the PFL(s) used by TN base station(s).

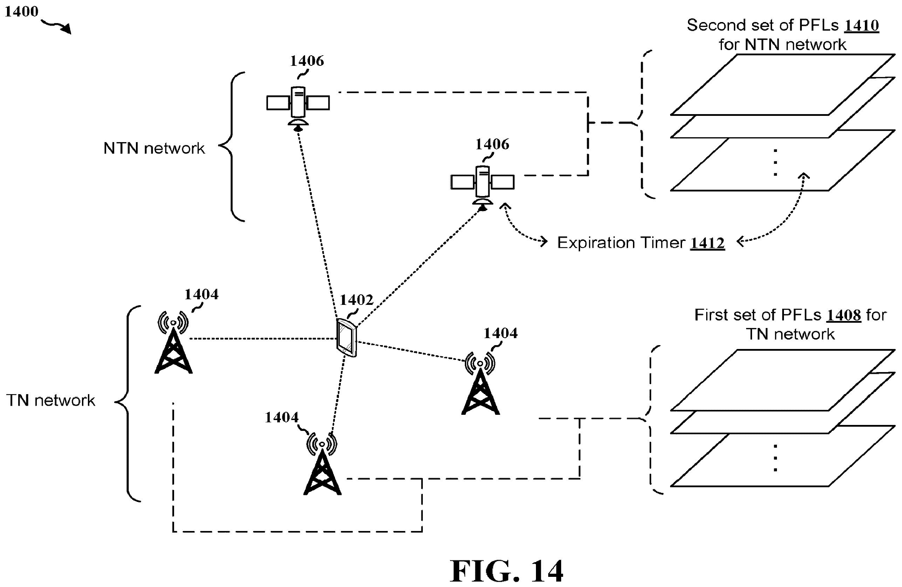

FIG. 14 is a diagram 1400 illustrating an example of associating TN and NTN with different PFLs in accordance with various aspects of the present disclosure. A network may include a segment of TN and a segment of NTN, such as described in connection with FIGs. 10A and 10B. The TN may include one or more TN devices 1404 (e.g., a ground base station, TRPs, etc.) and the NTN may include one or more NTN devices 1406 (e.g., satellites, aircrafts, etc.), where a UE 1402 in a positioning session may communicate (e.g., receive PRS and/or transmit SRS) with both TN devices 1404 and NTN devices 1406. The TN (or the TN base station) may be associated or configured with a first set of PFLs 1408, and the NTN (or the NTN base station) may be associated or configured with a second set of PFLs 1410, where the first set of PFLs 1408 may be different from the second set of PFLs 1410. In one example, the NTN network and the TN network may be operating on the same band. In another example, the NTN network and the TN network may be operating on different bands or partially overlapping bands. For purposes of the present disclosure, a UE positioning session or UE positioning that is associated with NTN (e.g., associated with at least one NTN satellite) may be referred to as an "NTN positioning session" or "NTN positioning." The NTN positioning session or NTN positioning may be based on both TN and NTN (e.g., use both TN devices and NTN devices for UE positioning), or based just on NTN.

In one aspect of the present disclosure, when TN and NTN are associated with different sets of PFLs, the UE 1402 may be configured (e.g., by an LMF) to support a maximum number of PFLs for each type of network. For example, the UE 1402 may be configured to support up to Y PFLs (e.g., 2 PFLs, 4 PFLs, etc.) for the TN network, and up to X PFLs (e.g., 1, PFLs, 3 PFLs, 5 PFLs, etc.) for the NTN. The Y PFLs may be dedicated to the TN or the TN devices 1404, and the X PFLs may be dedicated to the NTN or the NTN devices 1406. As such, the UE 1402 may be configured to support up to X + Y PFLs. For example, the UE 1402 may be configured to support up to 4 PFLs on TN (e.g., X = 4) and up to 2 PFLs on NTN (e.g., Y = 2), such that the UE 1402 may support up to a total of 6 PFLs.

In another example, the UE 1402 may be configured with a maximum number of PFLs for which the UE 1402 may support. Then, the UE 1402, the serving base station, and/or the LMF may determine the number of PFLs for the TN and the number of PFLs for the NTN. For example, if the UE 1402 is configured to support up to 6 PFLs, the UE 1402 may support 2 PFLs on TN and 4 PFLs on NTN, such that the UE may also support up to 6 PFLs in the mixture of NTN and TN configurations. Similarly, the UE 1402 may support 4 PFLs on TN and 2 PFLs on NTN, such that the 6 PFLs may include a combination of NTN and TN base stations (or devices/TRPs). By associating TN and NTN with different sets of PFLs, the UE 1402 may communicate with TN devices 1404 and/or the NTN devices 1406 in a more efficient manner.

In another aspect of the present disclosure, as a TN base station is more likely to have a fixed coverage area and an NTN base station is more likely to have a dynamic coverage (e.g., the coverage area for the NTN base station may keep on changing), an NTN base station (or TRP) or an NTN PFL (e.g., an PFL associated with NTN) may be associated with a timer. Then, a UE in a positioning session may measure or communicate with an NTN base station or via an NTN PFL based on the timer associated with the NTN base station or the NTN PFL being active. If the timer associated with the NTN base station or the NTN PFL expires, the UE may not communicate with the NTN base station or the NTN PFL.

In some scenarios, movement(s) and coverage(s) for NTN base station(s) may be deterministic, which may be computed by an LMF. For example, an LMF may have the knowledge of available NTN satellites/base stations in a given TN cell. As such, the LMF may computer the time for which an NTN satellite is going to be visible in the TN cell and/or for how long the NTN satellite is going to be visible in the TN cell. Then, the LMF may configure the assistance data for UE positioning based at least in part on the UE serving cell and/or the last best known estimate of UE position (e.g., before a UE positioning session, the LMF may be aware of UE location with some uncertainty). Thus, the LMF may define the NTN base station under a separate PFL, and/or a separate TRP as the coverage of the PFL and/or the TRP for the NTN base station may keep on changing on the earth.

In one example, an LMF may define an expiry timer for an NTN PFL and/or an NTN base station/TRP, where the expiry timer may indicate how long a UE may measure the NTN PFL or the NTN base station/TRP. For example, referring back to FIG. 14, an expiration timer 1412 may be associated with one or more of the NTN devices 1406 and/or one or more of the second set of PFLs 1410. As such, the UE 1402 may measure the second set of PFLs 1410 and/or communicate with the NTN devices 1406 when the expiration timer 1412 is running (e.g., not expired), and the UE 1402 may refrain from measuring the second set of PFLs 1410 and/or communicate with the NTN devices 1406 if the expiration timer 1412 expires. As such, the efficiency and latency for the UE positioning may be improved as the UE 1402 may avoid communicating with an NTN base station/TRP when the NTN base station/TRP's coverage area has left the UE.

In another example, as movement(s) and coverage(s) of NTN base station(s)/TRPs may be deterministic and computed by an LMF, the LMF may determine available NTN base station(s)/TRPs for a UE in a future duration of a given serving cell and/or a UE estimated location. For example, if the LMF knows the UE's coordinates, the LMF may be able to determine NTN base station(s)/TRPs with available coverage in one or more future time slots for the UE. Then, the LMF may provide the future time slots of the available NTN base station(s)/TRPs and/or NTN PFLs to the UE, such that the UE may communicate with the NTN base station(s)/TRPs and/or measure NTN PFLs based on the future time slots. Similarly, each NTN base station/TRP or NTN PFL may also be associated with an expiration timer.

As described in connection with FIG. 15 above, a UE in a positioning session may be provided with an expected RSTD value together with an uncertainty (e.g., a search space window) for the TRPs associated with the positioning session in the assistance data. For example, the value range of the expected RSTD may be +/- 500 us and the value range for the uncertainty of the expected RSTD. As the distance between an NTN base station and a UE may be much longer compared to the distance between a TN (e.g., ground) base station and the UE, there may be a larger propagation delay between the NTN base station and the UE compare to the TN base station and the UE. For example, the propagation delay between an NTN base station and a UE may be in an order of 400 to 500 ms, whereas the propagation delay between a TN base station and a UE may be in an order of 500 µs. As such, the value range of the expected RSTD and the value range of the uncertainty of the expected RSTD defined for a TN base station may not be suitable or applicable for an NTN base station. For example, the expected RSTD for a TN base station may cover the range of -0.5 ms to 0.5 ms and the uncertainty may cover the range of +/- 32 µs, which may be much shorter than the propagation delay associated with an NTN base station.

In one aspect of the present disclosure, for a network that includes TN and NTN, a separated information elements (IEs) may be configured or defined for the NTN in assistance data, such that an expected RSTD value range and an uncertainty value range of the expected RSTD may be defined for NTN base station(s)/TRPs. In other words, TN base stations/TRPs may have separate IEs for expected RSTD and uncertainty in assistance data, and NTN base station(s)/TRPs may also have separate IEs for expected RSTD and uncertainty in the assistance data.

In another aspect of the present disclosure, instead of configuring separate IEs for expected RSTD and uncertainty of TN and NTN base stations, a common IE may be configured for the expected RSTD and the uncertainty for both TN and NTN base stations. For example, a common expected RSTD value range and/or a common uncertainty value range may be defined for multiple PFLs and base stations that include TN and NTN PFLs and/or TN and NTN base stations. In some examples, there may be one common expected RSTD and/or one common uncertainty defined for each PFL. In other examples, there may be one common expected RSTD and/or one common uncertainty defined for a group of PFLs. Then, each base station or TRP may be associated with a delta expected RSTD and/or a delta uncertainty with respect to the common expected RSTD and/or the common uncertainty.

For example, a PFL may be associated with a common expected RSTD value range that covers +/- 100 ms and a common uncertainty value range that covers +/- 50 µs. Then, if a TN base station and an NTN base station are communicating with a UE via the PLF in a UE positioning session, a corresponding delta expected RSTD value range and/or a corresponding delta uncertainty value range with respect to the common expected RSTD value range may be applied between the UE and the TN base station and between the UE and the NTN base station. For example, if the NTN base station is associated with a delta expected RSTD value range of +/- 400 ms and a delta uncertainty value range of +/-30 µs, the delta expected RSTD value range and the delta uncertainty value range may be applied to the common expected RSTD value range and the common uncertainty value range to obtain a resulting expected RSTD value range of +/- 500 ms and a resulting uncertainty value range of +/- 80 µs between the NTN base station and the UE. In one example, an LMF may indicate to the UE or the NTN/TN base station to use the common expected RSTD and/or uncertainty for a base station/TRP or a PFL, such as via a flag or a bit indication. In another example, the UE may be provided with information regarding which base stations/TRPs are associated with NTN and which base stations/TRPs are associated with TN, such that the UE may determine which TRP is NTN and which TRP is TN.

In some scenarios, two NTN base stations (e.g., satellites) may cover an overlapping region on the earth, which may be a typical deployment to support inter-NTN base station handover (e.g., switching connection between a UE and a first NTN satellite to a second NTN satellite). In some examples, the overlapping region between two NTN base stations may be fixed all the time if the two NTN base stations are moving in the same direction with same speed. In other examples, the overlapping region may be fixed for some duration of time if the two NTN base stations are moving in the opposite direction or with different speed. As movements of the NTN base stations may be deterministic, an LMF may be aware of this overlapping region all the time.

In one aspect of the present disclosure, to improve the efficiency and latency for a UE to detect an NTN base station, such as during a handover procedure where the UE is switching connection from one NTN base station to another NTN base station, one or more associations between beams/cells of two NTN base stations may be defined for the UE, such that the UE may determine which beam(s) or cell(s) to measure when the UE switches from one NTN base station to another NTN base station.

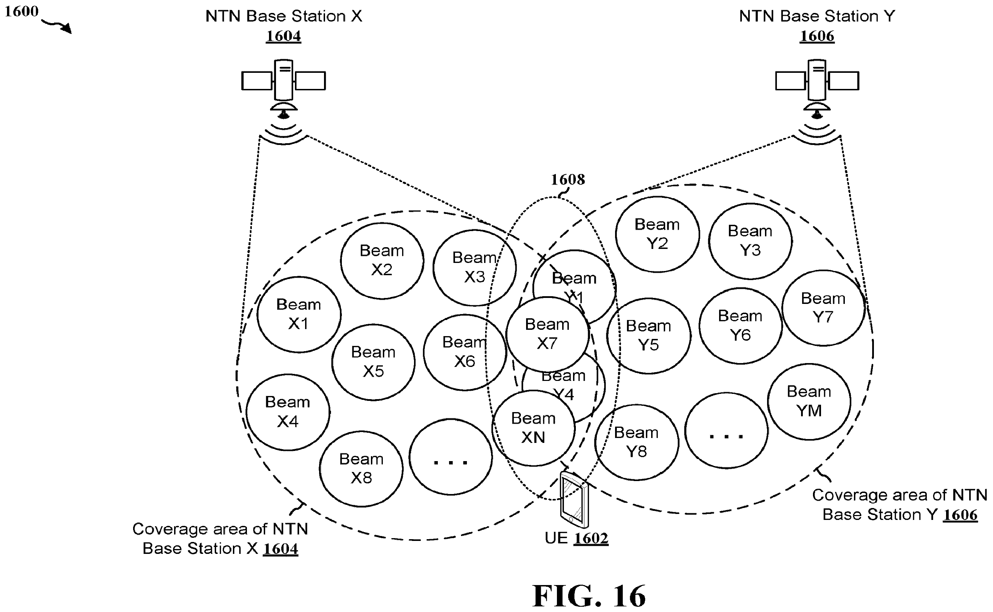

FIG. 16 is a diagram 1600 illustrating an example of associating one or more beams/cells of a first satellite with one or more beams/cells of a second satellite in accordance with various aspects of the present disclosure. A first NTN base station X 1604 may include up to N beams/cells that cover different areas on earth, such as beams/cells X1, X2, X3, ..., and up to beam/cell XN. Similarly, a second NTN base station Y 1606 may also include up to M beams/cells that cover different areas on earth, such as beams/cells Y1, Y2, Y3, ..., and up to beam/cell YM. In one example, as shown at 1608, the coverage area of the first NTN base station X 1604 and the coverage area of the second NTN base station Y 1606 may partially overlap with each other. For example, coverage areas of beams/cells X7 and XN of the first NTN base station X 1604 may overlap with coverage areas of beams/cells Y1 and Y4 of the second NTN base station Y 1606.

In one aspect, if an LMF is aware of the overlapping area or overlapping beams between the first NTN base station X 1604 and the second NTN base station Y 1606, the LMF may define an association between the overlapping beams/cells of the first NTN base station X 1604 and the second NTN base station Y 1606. For example, the LMF may associate beams/cells X7 and XN of the first NTN base station X 1604 with beams/cells Y1 and Y4 of the second NTN base station Y 1606 as they overlap with each other. Then, the LMF may provide the association to a UE in a UE positioning session to improve the latency and efficiency of the US positioning session. For example, a UE 1602 may perform beam/cell measurements/searches for all beams/cells on the first NTN base station X 1604 and found that it is able to decode beam/cell X7. Then, based on the association provided by the LMF, if the UE 1602 is going to connect to the second NTN base station Y 1606, the UE 1602 may measure or look for beams/cells Y1 and Y4 of the second NTN base station Y 1606, and the UE 1602 may skip measuring or looking for other beams/cells of the second NTN base station Y 1606. As such, the UE 1602 may save the search on the rest of M-2 cells on the second NTN base station Y 1606 which are not the neighbour of the first NTN base station X 1604's beams/cells X7 and XN. In some examples, the UE 1602 may use this association information to form a new priority rule of search based on its recent measurement results.

In another aspect of the present disclosure, a UE may include capabilities to communicate with different positioning platforms. For example, a UE may include capabilities to support the NTN positioning based on a LEO satellite platform, a MEO satellite platform, a GEO satellite platform, a HEO satellite platform, a UAS platform, or a combination thereof, etc. In some examples, different positioning platforms may specify different UE capabilities. For example, an NTN positioning based on GEO satellite platform may specify a static assistance data, whereas an NTN positioning based on LEO satellite platform may specify a dynamic assistance data as coverage of an LEO satellite on earth may keep on changing from time to time. Thus, in one aspect of the present disclosure, different assistance data may be defined for different positioning platforms to improve UE positioning. For example, a UE may indicate to an LMF the positioning platforms that are supported by the UE, and/or whether the UE has the capability to simultaneously process multiple positioning platforms. This information may enable the LMF to configure a more suitable or appropriate assistance data for the UE. For example, if a UE indicates to an LMF that it supports NTN positioning based on LEO satellite platform and MEO satellite platform, the LMF may configure NTN positioning for the UE based on LEO satellite platform and/or MEO satellite platform, and the LMF may avoid or refrain from configuring NTN positioning based on other positioning platforms not supported by the UE, such as the GEO satellite platform, the HEO satellite platform, or the UAS platform, etc. As such UE positioning efficiency may be improved. In another example, the UE may further indicate to the LMF whether it has the capability to support NTN along with Uu-based and/or SL-based positioning platform, such that the LMF may configure a UE positioning session that includes a combination of Uu, SL, and/or NTN positioning platforms.

In another example, the UE may also indicate to an LMF a list of bandwidth or a bandwidth combination for which the UE supports for NTN positioning, where available bandwidths may be defined for each of the positioning platforms. For example, a UE may indicate to an LMF that it is able to support an NTN positioning based on an LEO satellite platform with a first list of bandwidths or bandwidth combination, and that it is able to support an NTN positioning based on a MEO satellite platform with a second list of bandwidths or bandwidth combination. As such, the LMF may configure (e.g., via assistance data) appropriate bandwidth for the UE during an NTN positioning session based on the bandwidth information provided by the UE.

In another aspect of the present disclosure, for NTN positioning, a UE may be configured to perform aggregation and/or bandwidth (BW) stitching between different satellites from a same positioning platform (e.g., between different LEO satellites), or between different satellites from different platforms (e.g., between a LEO satellite and a GEO satellite), or between different a satellite and a ground base station (e.g., a Uu TRP). Bandwidth stitching may refer to a UE or a TRP receiving and processing aggregated reference signals for positioning (e.g., PRS or SRS) to increase the effective reference signal bandwidth, thereby increasing positioning accuracy. For example, an LMF may indicate to a UE via assistance data to perform bandwidth stitching for PRS transmitted from a first NTN satellite and PRS transmitted from a second NTN satellite, etc. In addition, the UE may indicate to the LMF whether it has the capability to perform the bandwidth stitching.

In another aspect of the present disclosure, a UE may indicate to an LMF whether it has the capability to support moving cell(s), fixed cell(s), or both for positioning, such as for NTN positioning. As such, different assistance data specifications and structures may be defined or configured for the UE by the LMF. For example, an expiration timer may be defined for a moving base station, such as an NTN satellite described in connection with FIG. 14.

In another aspect of the present disclosure, a UE may indicate to an LMF a maximum number of satellites supported by the UE for UE positioning (e.g., for NTN positioning). For example, a UE may indicate a maximum number of satellites supported on each individual positioning platform supported by the UE. For example, the UE may indicate that it has the capability to support up to four satellites for NTN positioning based on LEO satellite platform, and that is has the capability to support up to two satellites for NTN positioning based on MEO satellite platform, etc. In another example, the UE may indicate a maximum number of satellites supported across multiple positioning platforms. For example, the UE may indicate that it has the capability to support up to three satellites for NTN positioning based on LEO satellite platform and GEO satellite platform. As such, the LMF may configure (e.g., via assistance data) appropriate number of NTN satellites for the UE during an NTN positioning session based on the maximum satellite supported information provided by the UE.

Similarly, a UE may also indicate to an LMF a maximum number of TRPs, PRS resource sets, and/or PRS resources supported by the UE for UE positioning (e.g., for NTN positioning). For example, a UE may indicate a maximum number of TRPs, PRS resource sets, and/or PRS resources supported on each individual positioning platform supported by the UE. For example, the UE may indicate that it has the capability to support up to three TRPs, four PRS resource sets, and/or eight PRS resources based on LEO satellite platform, and that is has the capability to support up to two TRPs, three PRS resource sets, and/or six PRS resources for NTN positioning based on MEO satellite platform, etc. In another example, the UE may indicate a maximum number of TRPs, PRS resource sets, and/or PRS resources supported across multiple positioning platforms. For example, the UE may indicate that it has the capability to support up to two TRPs, two PRS resource sets, and/or four PRS resources for NTN positioning based on LEO satellite platform and GEO satellite platform. As such, the LMF may configure (e.g., via assistance data) appropriate number of TRPs, PRS resource sets, and/or PRS resources for the UE during an NTN positioning session based on the maximum TRP, PRS resource set, and/or PRS resource supported information provided by the UE.

In another aspect of the present disclosure, a UE may indicate to an LMF a maximum number of PFLs supported for NTN. For example, the UE may indicate a maximum number of PFLs it is able to support for standalone NTN operations (e.g., for NTN positioning without TN devices), a maximum number of PFLs it is able to support for mixed NTN and Uu operations, and/or a maximum number of PFLs it is able to support for mixed NTN and Uu and SL operations, etc. As such, the LMF may configure (e.g., via assistance data) appropriate number of PFLs for the UE during an NTN positioning session based on the maximum PFL supported information provided by the UE.

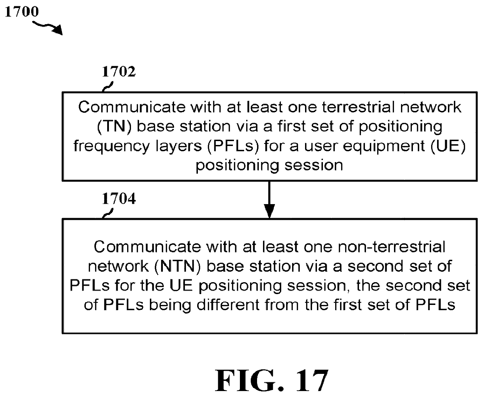

FIG. 17 is a flowchart 1700 of a method of wireless communication. The method may be performed by a UE or a component of a UE (e.g., the UE 104, 350, 404, 602, 702, 810, 1002, 1202, 1402, 1502, 1602; the apparatus 1802; a processing system, which may include the memory 360 and which may be the entire UE 350 or a component of the UE 350, such as the TX processor 368, the RX processor 356, and/or the controller/processor 359). The method may enable the UE to communicate with at least one NTN base station in a more efficient manner to improve latency and accuracy of NTN positioning.

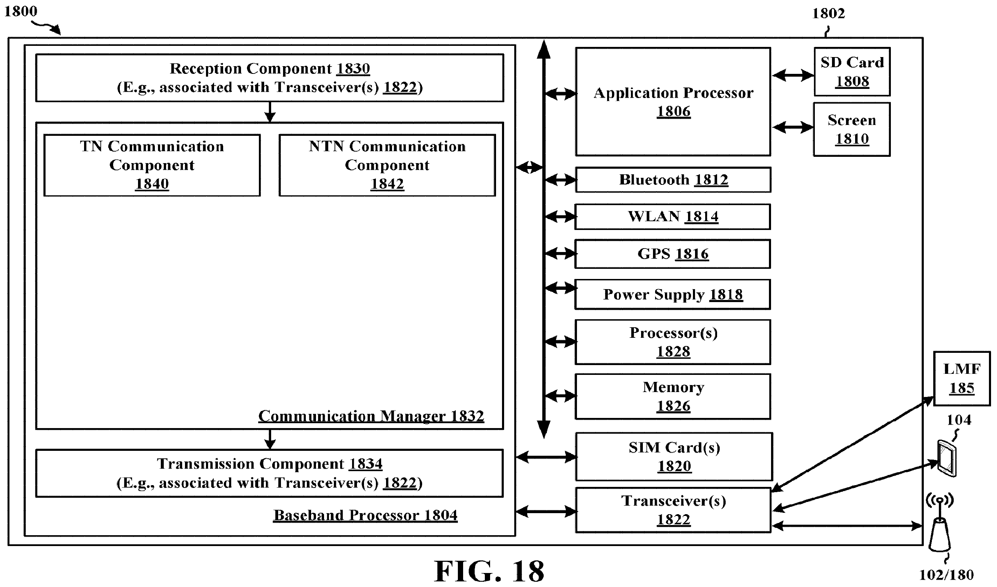

At 1702, the UE may communicate with at least one TN base station via a first set of PFLs for a UE positioning session, such as described in connection with FIG. 14. For example, as shown by the diagram 1400, the UE 1402 may communicate with one or more TN devices 1404 (e.g., ground base station/TRP) via a first set of PFLs 1408 in a UE positioning session. The communication with at least one TN base station may be performed by, e.g., the TN communication component 1840, the reception component 1830, and/or the transmission component 1834 of the apparatus 1802 in FIG. 18.

At 1704, the UE may communicate with at least one NTN base station via a second set of PFLs for the UE positioning session, the second set of PFLs being different from the first set of PFLs, such as described in connection with FIG. 12. For example, as shown by the diagram 1400, the UE 1402 may communicate with one or more NTN devices 1406 (e.g., NTN base station, NTN satellite) via a second set of PFLs 1410 in the UE positioning session, where the second set of PFLs 1410 is not the same as the first set of PFLs 1408. The communication with at least one NTN base station may be performed by, e.g., the NTN communication component 1842, the reception component 1830, and/or the transmission component 1834 of the apparatus 1802 in FIG. 18.

In one example, the first set of PFLs may include X PFLs and the second set of PFLs may include Y PFLs, the UE may be configured to support up to X + Y PFLs.

In another example, the at least one TN base station may be operating on a first frequency bandwidth and the at least one NTN base station may be operating on a second frequency bandwidth, the first frequency bandwidth being different from the second frequency bandwidth.

In another example, the at least one TN base station and the at least one NTN base station may be operating on a same frequency bandwidth.

In another example, each of the second set of PFLs or the at least one NTN base station may be associated with a timer, where the UE may communicate with the at least one NTN base station via one of the second set of PFLs for the UE positioning session if the timer is not expired. In such an example, the UE may receive the timer from an LMF. In such an example, the UE may receive, from the LMF, a list of available PFLs for the at least one NTN base station prior to the UE positioning session, where the second set of PFLs may be selected based on the list of available PFLs.

In another example, one or more of the first set of PFLs or one or more of the at least one TN base station may be associated with a first expected RSTD value and a first uncertainty value, and one or more of the second set of PFLs or one or more of the at least one NTN base station may be associated with a second expected RSTD value and a second uncertainty value, the first expected RSTD value being different from the second expected RSTD value and the first uncertainty value being different from the second uncertainty value. In such an example, one or more first IEs for the first expected RSTD value and the first uncertainty value may be different from one or more second IEs for the second expected RSTD value and the second uncertainty value in assistance data.

In another example, one or more of the first set of PFLs or one or more of the at least one TN base station and one or more of the second set of PFLs or one or more of the at least one NTN base station may be associated with a common expected RSTD value. In such an example, each of the one or more of the first set of PFLs, the one or more of the at least one TN base station, the one or more of the second set of PFLs, or the one or more of the at least one NTN base station may be associated with a delta expected RSTD that is to be applied to the common RSTD value.

In another example, the at least one NTN base station may include a first NTN satellite base station that covers a first coverage area and a second NTN satellite base station that covers a second coverage area. In such an example, the UE may receive, from an LMF, an association between a first set of beams of the first NTN satellite base station and a second set of beams of the second NTN satellite base station, and the UE may measure the first set of beams and the second set of beams based on the association. In such an example, the UE may skip measuring beams of the second NTN satellite base station that are not associated with the first set of beams of the first NTN satellite base station. In such an example, the second coverage area may partially overlap with the first coverage area at a coverage overlapping area, where the first set of beams of the first NTN satellite base station and second set of beams of the second NTN satellite base station may be in the coverage overlapping area.

In another example, the UE may transmit, to an LMF, an indication of at least one type of satellite platform supported by the UE for communicating with the at least one NTN base station. In such an example, the UE may receive, from the LMF, assistance data that is specific to the at least one type of satellite platform supported by the UE. In such an example, the at least one type of satellite platform includes one or more of: a LEO satellite platform, an MEO satellite platform, a GEO satellite platform, a HEO satellite platform, or an UAS platform. In such an example, each of the at least one type of satellite platform may be further associated with a list of bandwidths that is to be supported by the UE for communicating with the at least one type of satellite platform.

In another example, the at least one NTN base station may be associated with multiple satellite platforms, and the UE may be configured to process the multiple satellite platforms simultaneously. In another example, the UE may perform bandwidth stitching between first different satellites of a same satellite platform or between second different satellites of different satellite platforms. In another example, the indication may further include one or more of: a maximum number of satellites supported by the UE for each of the at least one type of satellite platform, a maximum number of TRPs supported by the UE for each of the at least one type of satellite platform, a maximum number of PRS resource sets supported by the UE for each of the at least one type of satellite platform, or a maximum number of PRS resources supported by the UE for each of the at least one type of satellite platform. In such an example, the indication may further include one or more of: a maximum number of satellites supported by the UE across all of the at least one type of satellite platform, a maximum number of TRPs supported by the UE across all of the at least one type of satellite platform, a maximum number of PRS resource sets supported by the UE across all of the at least one type of satellite platform, or a maximum number of PRS resources supported by the UE across all of the at least one type of satellite platform.

In another example, the UE may transmit, to an LMF, an indication of: a maximum number of first PFLs supported by the UE for UE positioning with standalone NTN operations, or a maximum number of second PFLs supported by the UE for UE positioning with a mix of at least one NTN operation and at least one TN operation, where the at least one TN operation may include at least one of a universal mobile telecommunications system (UMTS) air interface (Uu) operation or a sidelink (SL) operation.

FIG. 18 is a diagram 1800 illustrating an example of a hardware implementation for an apparatus 1802. The apparatus 1802 may be a UE, a component of a UE, or may implement UE functionality. In some aspects, the apparatus1802 may include a baseband processor 1804 (also referred to as a modem) coupled to at least one transceiver 1822 (e.g., one or more RF transceiver and/or antennas). The at least one transceiver 1822 may be associated with or include a reception component 1830 and/or a transmission component 1834. In some aspects, the apparatus 1802 may further include one or more subscriber identity modules (SIM) cards 1820, an application processor 1806 coupled to a secure digital (SD) card 1808 and a screen 1810, a Bluetooth module 1812, a wireless local area network (WLAN) module 1814, a Global Positioning System (GPS) module 1816, or a power supply 1818. The baseband processor 1804 communicates through the at least one transceiver 1822 with the UE 104, the LMF 185, and/or the base station 102/180. The baseband processor 1804 may include a computer-readable medium / memory (e.g., a memory 1826). The computer-readable medium / memory may be non-transitory. The baseband processor 1804 and/or at least one processor 1828 is responsible for general processing, including the execution of software stored on the computer-readable medium / memory. The software, when executed by the baseband processor 1804 and/or the at least one processor 1828, causes the baseband processor 1804 and/or the at least one processor 1828 to perform the various functions described *supra.* The computer-readable medium / memory may also be used for storing data that is manipulated by the baseband processor 1804 when executing software. The baseband processor 1804 further includes the reception component 1830, a communication manager 1832, and the transmission component 1834. The reception component 1830 and the transmission component 1834 may, in a non-limiting example, include at least one transceiver and/or at least one antenna subsystem. The communication manager 1832 includes the one or more illustrated components. The components within the communication manager 1832 may be stored in the computer-readable medium / memory and/or configured as hardware within the baseband processor 1804. The baseband processor 1804 may be a component of the UE 350 and may include the memory 360 and/or at least one of the TX processor 368, the RX processor 356, and the controller/processor 359. In one configuration, the apparatus 1802 may be a modem chip and include just the baseband processor 1804, and in another configuration, the apparatus 1802 may be the entire UE (e.g., see 350 of FIG. 3) and include the additional modules of the apparatus 1802.

The communication manager 1832 includes a TN communication component 1840 that is configured to communicate with at least one TN base station via a first set of PFLs for a UE positioning session, e.g., as described in connection with 1702 of FIG. 17. The communication manager 1832 further includes an NTN communication component 1842 that is configured to communicate with at least one NTN base station via a second set of PFLs for the UE positioning session, the second set of PFLs being different from the first set of PFLs, e.g., as described in connection with 1704 of FIG. 17.

The apparatus may include additional components that perform each of the blocks of the algorithm in the flowchart of FIG. 17. As such, each block in the flowchart of FIG. 17 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 1802 may include a variety of components configured for various functions. In one configuration, the apparatus 1802, and in particular the baseband processor 1804, includes means for communicating with at least one TN base station via a first set of PFLs for a UE positioning session (e.g., the TN communication component 1840, the reception component 1830, and/or the transmission component 1834). The apparatus 1802 includes means for communicating with at least one NTN base station via a second set of PFLs for the UE positioning session, the second set of PFLs being different from the first set of PFLs (e.g., the NTN communication component 1842, the reception component 1830, and/or the transmission component 1834).

In one configuration, the first set of PFLs may include X PFLs and the second set of PFLs may include Y PFLs, the UE may be configured to support up to X + Y PFLs.

In another configuration, the at least one TN base station may be operating on a first frequency bandwidth and the at least one NTN base station may be operating on a second frequency bandwidth, the first frequency bandwidth being different from the second frequency bandwidth.

In another configuration, the at least one TN base station and the at least one NTN base station may be operating on a same frequency bandwidth.

In another configuration, each of the second set of PFLs or the at least one NTN base station may be associated with a timer, the apparatus 1802 includes means for communicating with the at least one NTN base station via one of the second set of PFLs for the UE positioning session if the timer is not expired. In such a configuration, the apparatus 1802 includes means for receiving the timer from an LMF. In such a configuration, the apparatus 1802 includes means for receiving, from the LMF, a list of available PFLs for the at least one NTN base station prior to the UE positioning session, where the second set of PFLs may be selected based on the list of available PFLs.

In another configuration, one or more of the first set of PFLs or one or more of the at least one TN base station may be associated with a first expected RSTD value and a first uncertainty value, and one or more of the second set of PFLs or one or more of the at least one NTN base station may be associated with a second expected RSTD value and a second uncertainty value, the first expected RSTD value being different from the second expected RSTD value and the first uncertainty value being different from the second uncertainty value. In such a configuration, one or more first IEs for the first expected RSTD value and the first uncertainty value may be different from one or more second IEs for the second expected RSTD value and the second uncertainty value in assistance data.

In another configuration, one or more of the first set of PFLs or one or more of the at least one TN base station and one or more of the second set of PFLs or one or more of the at least one NTN base station may be associated with a common expected RSTD value. In such a configuration, each of the one or more of the first set of PFLs, the one or more of the at least one TN base station, the one or more of the second set of PFLs, or the one or more of the at least one NTN base station may be associated with a delta expected RSTD that is to be applied to the common RSTD value.

In another configuration, the at least one NTN base station may include a first NTN satellite base station that covers a first coverage area and a second NTN satellite base station that covers a second coverage area. In such a configuration, the apparatus 1802 includes means for receiving, from an LMF, an association between a first set of beams of the first NTN satellite base station and a second set of beams of the second NTN satellite base station, and means for measuring the first set of beams and the second set of beams based on the association. In such a configuration, the apparatus 1802 includes means for skipping measuring beams of the second NTN satellite base station that are not associated with the first set of beams of the first NTN satellite base station. In such a configuration, the second coverage area partially overlaps with the first coverage area at a coverage overlapping area, where the first set of beams of the first NTN satellite base station and second set of beams of the second NTN satellite base station are in the coverage overlapping area.

In another configuration, the apparatus 1802 includes means for transmitting, to an LMF, an indication of at least one type of satellite platform supported by the UE for communicating with the at least one NTN base station. In such a configuration, the apparatus 1802 includes means for receiving, from the LMF, assistance data that is specific to the at least one type of satellite platform supported by the UE. In such a configuration, the at least one type of satellite platform includes one or more of: a LEO satellite platform, an MEO satellite platform, a GEO satellite platform, a HEO satellite platform, or an UAS platform. In such a configuration, each of the at least one type of satellite platform may be further associated with a list of bandwidths that is to be supported by the UE for communicating with the at least one type of satellite platform.

In another configuration, the at least one NTN base station may be associated with multiple satellite platforms, and the UE may be configured to process the multiple satellite platforms simultaneously. In another configuration, the apparatus 1802 includes means for performing bandwidth stitching between different satellites of a same satellite platform or between different satellites of different satellite platforms. In another configuration, the indication may further include one or more of: a maximum number of satellites supported by the UE for each of the at least one type of satellite platform, a maximum number of TRPs supported by the UE for each of the at least one type of satellite platform, a maximum number of PRS resource sets supported by the UE for each of the at least one type of satellite platform, or a maximum number of PRS resources supported by the UE for each of the at least one type of satellite platform. In such a configuration, the indication may further include one or more of: a maximum number of satellites supported by the UE across all of the at least one type of satellite platform, a maximum number of TRPs supported by the UE across all of the at least one type of satellite platform, a maximum number of PRS resource sets supported by the UE across all of the at least one type of satellite platform, or a maximum number of PRS resources supported by the UE across all of the at least one type of satellite platform.

In another configuration, the apparatus 1802 includes means for transmitting, to an LMF, an indication of: a maximum number of first PFLs supported by the UE for UE positioning with standalone NTN operations, or a maximum number of second PFLs supported by the UE for UE positioning with a mix of at least one NTN operation and at least one TN operation, where the at least one TN operation may include at least one of a Uu operation or an SL operation.

The means may be one or more of the components of the apparatus 1802 configured to perform the functions recited by the means. As described *supra,* the apparatus 1802 may include the TX Processor 368, the RX Processor 356, and the controller/processor 359. As such, in one configuration, the means may be the TX Processor 368, the RX Processor 356, and the controller/processor 359 configured to perform the functions recited by the means.

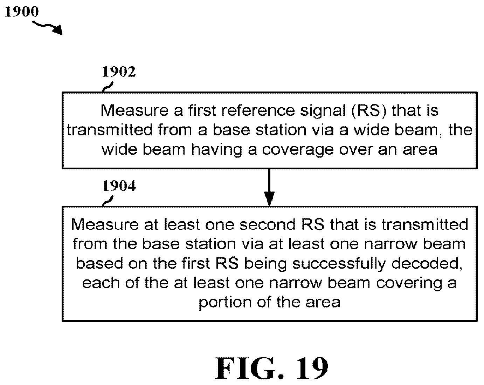

FIG. 19 is a flowchart 1900 of a method of wireless communication. The method may be performed by a UE or a component of a UE (e.g., the UE 104, 350, 404, 602, 702, 810, 1002, 1202, 1402, 1502, 1602; the apparatus 2002; a processing system, which may include the memory 360 and which may be the entire UE 350 or a component of the UE 350, such as the TX processor 368, the RX processor 356, and/or the controller/processor 359). The method may enable the UE to communicate with at least one NTN base station in a more efficient manner to improve latency and accuracy of NTN positioning.

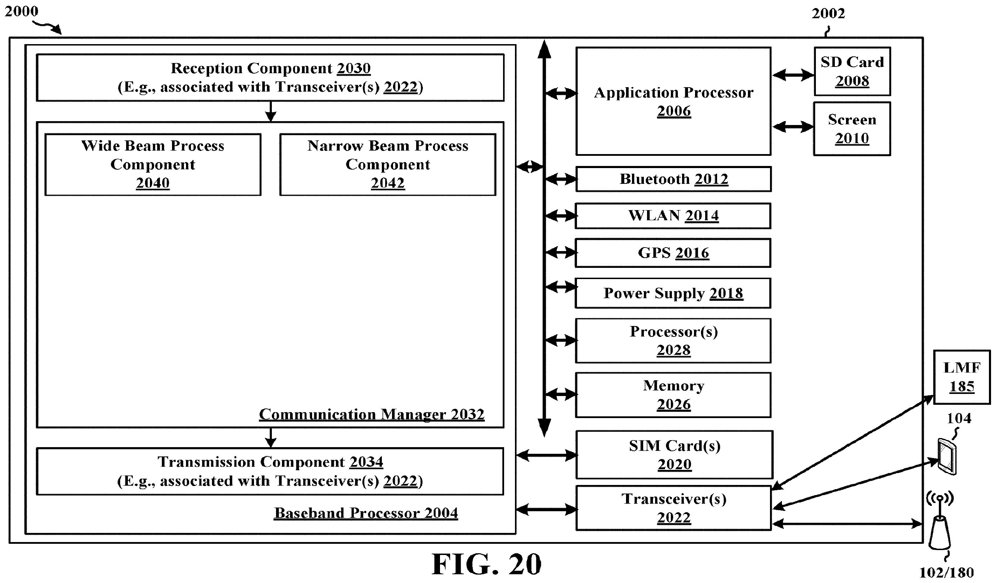

At 1902, the UE may measure a first RS that is transmitted from a base station via a wide beam, the wide beam having a coverage over an area, such as described in connection with FIG. 12. For example, at 1210, the UE 1202 may measure a first RS via a that is transmitted from the satellite 1204 (e.g., an NTN base station) via a wide beam 1206, where the wide beam has a coverage over an area shown at 1214. The measurement of the first RS (or wide beam) may be performed by, e.g., the wide beam process component 2040 and/or the reception component 2030 of the apparatus 2002 in FIG. 20.

At 1904, the UE may measure at least one second RS that is transmitted from the base station via at least one narrow beam based on the first RS being successfully decoded, each of the at least one narrow beam covering a portion of the area, such as described in connection with FIG. 12. For example, at 1212, the UE 1202 may measure at least one second RS that is transmitted from the satellite 1204 via one of narrow beams 1208 based on the RS transmitted from the wide beam 1206 being successfully decoded, each of the narrow beams 1208 covers a portion of the area covered by the wide beam 1206 as shown at 1214. The measurement of the second RS (or narrow beam) may be performed by, e.g., the narrow beam process component 2042 and/or the reception component 2030 of the apparatus 2002 in FIG. 20.

In one example, the base station may be a satellite base station.

In another example, the wide beam may be configured with lower resources compared to the at least one narrow beam. In such an example, the lower resources may include one or more of: a lower bandwidth, a less complex comb pattern, a longer periodicity, a smaller repetition factor, or a shorter duration.

In another example, the at least one narrow beam may be a subset of the wide beam.

In another example, the wide beam may be configured with a higher measurement priority over the at least one narrow beam. The UE may receive, from an LMF, a measurement priority associated with the wide beam and the at least one narrow beam.

In another example, the UE may receive, from an LMF, an association between the wide beam and the at least one narrow beam, and the UE may measure the wide beam and the at least one narrow beam based on the association.

In another example, the UE may receive, from an LMF, a first configuration for measuring the wide beam, the UE may transmit, to the LMF, a measurement for the wide beam, and the UE may receive, from the LMF, a second configuration for measuring the at least one narrow beam, where the at least one narrow beam is selected based on the measurement for the wide beam.

In another example, each of the at least one narrow beam may be associated with a physical cell identity.

FIG. 20 is a diagram 2000 illustrating an example of a hardware implementation for an apparatus 2002. The apparatus 2002 may be a UE, a component of a UE, or may implement UE functionality. In some aspects, the apparatus2002 may include a baseband processor 2004 (also referred to as a modem) coupled to at least one transceiver 2022 (e.g., one or more RF transceiver and/or antennas). The at least one transceiver 2022 may be associated with or include a reception component 2030 and/or a transmission component 2034. In some aspects, the apparatus 2002 may further include one or more subscriber identity modules (SIM) cards 2020, an application processor 2006 coupled to a secure digital (SD) card 2008 and a screen 2010, a Bluetooth module 2012, a wireless local area network (WLAN) module 2014, a Global Positioning System (GPS) module 2016, or a power supply 2018. The baseband processor 2004 communicates through the at least one transceiver 2022 with another UE 104, an LMF, and/or the base station 102/180. The baseband processor 2004 may include a computer-readable medium / memory (e.g., a memory 2026). The computer-readable medium / memory may be non-transitory. The baseband processor 2004 and/or at least one processor 2028 is responsible for general processing, including the execution of software stored on the computer-readable medium / memory. The software, when executed by the baseband processor 2004 and/or the at least one processor 2028, causes the baseband processor 2004 and/or the at least one processor 2028 to perform the various functions described *supra.* The computer-readable medium / memory may also be used for storing data that is manipulated by the baseband processor 2004 when executing software. The baseband processor 2004 further includes the reception component 2030, a communication manager 2032, and the transmission component 2034. The reception component 2030 and the transmission component 2034 may, in a non-limiting example, include at least one transceiver and/or at least one antenna subsystem. The communication manager 2032 includes the one or more illustrated components. The components within the communication manager 2032 may be stored in the computer-readable medium / memory and/or configured as hardware within the baseband processor 2004. The baseband processor 2004 may be a component of the UE 350 and may include the memory 360 and/or at least one of the TX processor 368, the RX processor 356, and the controller/processor 359. In one configuration, the apparatus 2002 may be a modem chip and include just the baseband processor 2004, and in another configuration, the apparatus 2002 may be the entire UE (e.g., see 350 of FIG. 3) and include the additional modules of the apparatus 2002.

The communication manager 2032 includes a wide beam process component 2040 that is configured to measure a first RS that is transmitted from a base station via a wide beam, the wide beam having a coverage over an area, e.g., as described in connection with 1902 of FIG. 19. The communication manager 2032 further includes a narrow beam process component 2042 that is configured to measure at least one second RS that is transmitted from the base station via at least one narrow beam based on the first RS being successfully decoded, each of the at least one narrow beam covering a portion of the area, e.g., as described in connection with 1904 of FIG. 19.

The apparatus may include additional components that perform each of the blocks of the algorithm in the flowchart of FIG. 19. As such, each block in the flowchart of FIG. 19 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 2002 may include a variety of components configured for various functions. In one configuration, the apparatus 2002, and in particular the baseband processor 2004, includes means for measuring a first RS that is transmitted from a base station via a wide beam, the wide beam having a coverage over an area (e.g., the wide beam process component 2040 and/or the reception component 2030). The apparatus 2002 includes means for measuring at least one second RS that is transmitted from the base station via at least one narrow beam based on the first RS being successfully decoded, each of the at least one narrow beam covering a portion of the area (e.g., the narrow beam process component 2042 and/or the reception component 2030).

In one configuration, the base station may be a satellite base station.

In another configuration, the wide beam may be configured with lower resources compared to the at least one narrow beam. In such a configuration, the lower resources may include one or more of: a lower bandwidth, a less complex comb pattern, a longer periodicity, a smaller repetition factor, or a shorter duration.

In another configuration, the at least one narrow beam may be a subset of the wide beam.

In another configuration, the wide beam may be configured with a higher measurement priority over the at least one narrow beam. In such a configuration, the apparatus 2002 includes means for receiving, from an LMF, a measurement priority associated with the wide beam and the at least one narrow beam.

In another configuration, the apparatus 2002 includes means for receiving, from an LMF, an association between the wide beam and the at least one narrow beam, and means for measuring the wide beam and the at least one narrow beam based on the association.

In another configuration, the apparatus 2002 includes means for receiving, from an LMF, a first configuration for measuring the wide beam, means for transmitting, to the LMF, a measurement for the wide beam, and means for receiving, from the LMF, a second configuration for measuring the at least one narrow beam, where the at least one narrow beam is selected based on the measurement for the wide beam.

In another configuration, each of the at least one narrow beam may be associated with a physical cell identity.

The means may be one or more of the components of the apparatus 2002 configured to perform the functions recited by the means. As described *supra,* the apparatus 2002 may include the TX Processor 368, the RX Processor 356, and the controller/processor 359. As such, in one configuration, the means may be the TX Processor 368, the RX Processor 356, and the controller/processor 359 configured to perform the functions recited by the means.

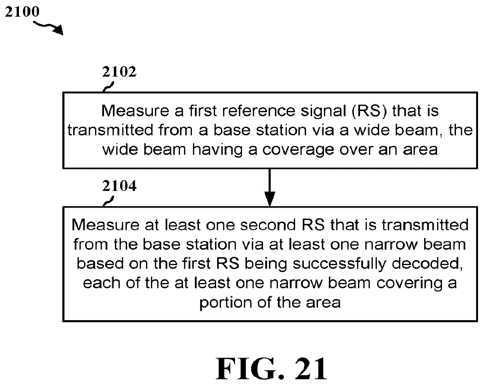

FIG. 21 is a flowchart 2100 of a method of wireless communication. The method may be performed by a base station or a component of a base station (e.g., the base station 102, 180, 310, 704; the NTN devices 1406; the first NTN base station X 1604, 1606; the satellite 1204; the apparatus 2202; a processing system, which may include the memory 376 and which may be the entire base station 310 or a component of the base station 310, such as the TX processor 316 the RX processor 370, and/or the controller/processor 375). The method may enable the base station to communicate with a UE in a more efficient manner to improve latency and accuracy of NTN positioning.

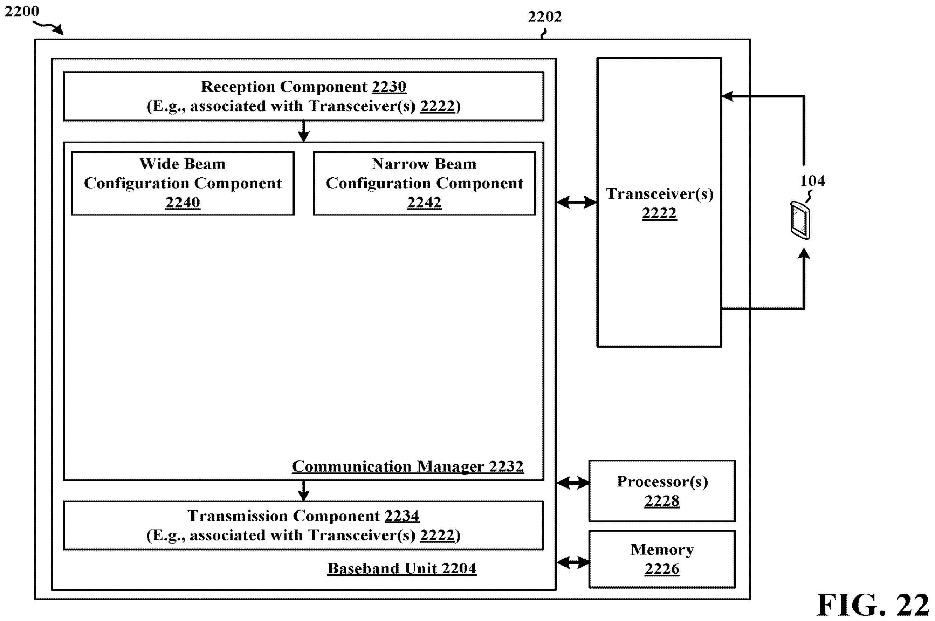

At 2102, the base station may transmit, to a UE, a first RS via a wide beam, the wide beam having a coverage over an area, such as described in connection with FIG. 12. For example, at 1210, the satellite 1204 (e.g., an NTN base station) may transmit, to the UE 1202, a first RS via a wide beam 1206, the wide beam 1206 having a coverage over an area as shown at 1214. The transmission of RS via a wide beam may be performed by, e.g., the wide beam configuration component 2240 and/or the transmission component 2234 of the apparatus 2202 in FIG. 22.

At 2104, the base station may transmit, to the UE, at least one second RS via at least one narrow beam, each of the at least one narrow beam covering a portion of the area, such as described in connection with FIG. 12. For example, at 1212, the satellite 1204 may transmit, to the UE 1202, at least one second RS via at least one of narrow beams 1208, each of the narrow beams 1208 may cover a portion of the area covered by the wide beam 1206 as shown at 1214. The transmission of RS via a narrow beam may be performed by, e.g., the narrow beam configuration component 2242 and/or the transmission component 2234 of the apparatus 2202 in FIG. 22.

In one example, the base station may be a satellite base station.

In another example, the wide beam may be configured with lower resources compared to the at least one narrow beam. In such an example, the lower resources may include one or more of: a lower bandwidth, a less complex comb pattern, a longer periodicity, a smaller repetition factor, or a shorter duration.

In another example, the at least one narrow beam may be a subset of the wide beam.

In another example, the wide beam may be configured with a higher measurement priority over the at least one narrow beam

In another example, each of the at least one narrow beam may be associated with a physical cell identity.

FIG. 22 is a diagram 2200 illustrating an example of a hardware implementation for an apparatus 2202. The apparatus 2202 may be a base station, a component of a base station, or may implement base station functionality. In some aspects, the apparatus 2202 may include a baseband unit 2204. The baseband unit 2204 may communicate through at least one transceiver 2222 (e.g., one or more RF transceivers and/or antennas) with the UE 104. The at least one transceiver 2222 may be associated with or include a reception component 2230 and/or a transmission component 2234. The baseband unit 2204 may include a computer-readable medium / memory (e.g., a memory 2226). The baseband unit 2204 and/or the at least one processor 2228 may be responsible for general processing, including the execution of software stored on the computer-readable medium / memory. The software, when executed by the baseband unit 2204 and/or the at least one processor 2228, causes the baseband unit 2204 and/or the at least one processor 2228 to perform the various functions described *supra.* The computer-readable medium / memory may also be used for storing data that is manipulated by the baseband unit 2204 when executing software. The baseband unit 2204 further includes the reception component 2230, a communication manager 2232, and the transmission component 2234. The reception component 2230 and the transmission component 2234 may, in a non-limiting example, include at least one transceiver and/or at least one antenna subsystem. The communication manager 2232 includes the one or more illustrated components. The components within the communication manager 2232 may be stored in the computer-readable medium / memory and/or configured as hardware within the baseband unit 2204. The baseband unit 2204 may be a component of the base station 310 and may include the memory 376 and/or at least one of the TX processor 316, the RX processor 370, and the controller/processor 375.

The communication manager 2232 includes a wide beam configuration component 2240 that is configured to transmit, to a UE, a first RS via a wide beam, the wide beam having a coverage over an area, e.g., as described in connection with 2102 of FIG. 21. The communication manager 2232 further includes a narrow beam configuration component 2242 that is configured to transmit, to the UE, at least one second RS via at least one narrow beam, each of the at least one narrow beam covering a portion of the area, e.g., as described in connection with 2104 of FIG. 21.

The apparatus may include additional components that perform each of the blocks of the algorithm in the flowchart of FIG. 21. As such, each block in the flowchart of FIG. 21 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

As shown, the apparatus 2202 may include a variety of components configured for various functions. In one configuration, the apparatus 2202, and in particular the baseband unit 2204, includes means for transmitting, to a UE, a first RS via a wide beam, the wide beam having a coverage over an area (e.g., the wide beam configuration component 2240 and/or the transmission component 2234). The apparatus 2202 includes means for transmitting, to the UE, at least one second RS via at least one narrow beam, each of the at least one narrow beam covering a portion of the area (e.g., the narrow beam configuration component 2242 and/or the transmission component 2234).

In one configuration, the apparatus 2202 may be a satellite base station.

In another configuration, the wide beam may be configured with lower resources compared to the at least one narrow beam. In such a configuration, the lower resources may include one or more of: a lower bandwidth, a less complex comb pattern, a longer periodicity, a smaller repetition factor, or a shorter duration.

In another configuration, the at least one narrow beam may be a subset of the wide beam.

In another configuration, the wide beam may be configured with a higher measurement priority over the at least one narrow beam.

In another configuration, each of the at least one narrow beam may be associated with a physical cell identity.

The means may be one or more of the components of the apparatus 2202 configured to perform the functions recited by the means. As described supra, the apparatus 2202 may include the TX Processor 316, the RX Processor 370, and the controller/processor 375. As such, in one configuration, the means may be the TX Processor 316, the RX Processor 370, and the controller/processor 375 configured to perform the functions recited by the means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. An apparatus (1802) for wireless communication at a user equipment, UE, comprising:
a memory (1826);
at least one transceiver (1822); and
at least one processor (1828) communicatively connected to the memory and the at least one transceiver, the at least one processor configured to:
communicate (1702) with at least one terrestrial network, TN, base station via a first set of positioning frequency layers, PFLs, for a UE positioning session; and
communicate (1704) with at least one non-terrestrial network, NTN, base station via a second set of PFLs for the UE positioning session, the second set of PFLs being different from the first set of PFLs;
wherein each of the second set of PFLs or the at least one NTN base station is associated with a timer, the at least one processor being further configured to:
communicate, for the UE positioning session, with the at least one NTN base station via one of the second set of PFLs for the UE positioning session if the timer is not expired;
not communicate with the at least one NTN base station via one of the second set of PFLs for the UE positioning session if the timer is expired.

2. The apparatus (1802) of claim 1, wherein the first set of PFLs includes X PFLs and the second set of PFLs includes Y PFLs, wherein the at least one processor is further configured to support up to X + Y PFLs.

3. The apparatus (1802) of claim 1, wherein:
the at least one TN base station is operating on a first frequency bandwidth and the at least one NTN base station is operating on a second frequency bandwidth, the first frequency bandwidth being different from the second frequency bandwidth; or
the at least one TN base station and the at least one NTN base station are operating on a same frequency bandwidth.

4. The apparatus (1802) of claim 1, wherein the at least one processor is further configured to:
receive the timer from a location management function, LMF;
wherein preferably the at least one processor is further configured to receive, from the LMF, a list of available PFLs for the at least one NTN base station prior to the UE positioning session, wherein the second set of PFLs are selected based on the list of available PFLs.

5. The apparatus (1802) of claim 1, wherein one or more of the first set of PFLs or one or more of the at least one TN base station are associated with a first expected reference signal time difference, RSTD, value and a first uncertainty value, and one or more of the second set of PFLs or one or more of the at least one NTN base station are associated with a second expected RSTD value and a second uncertainty value, the first expected RSTD value being different from the second expected RSTD value and the first uncertainty value being different from the second uncertainty value, wherein preferably one or more first information elements, IEs, for the first expected RSTD value and the first uncertainty value are different from one or more second IEs for the second expected RSTD value and the second uncertainty value in assistance data, AD.

6. The apparatus (1802) of claim 1, wherein one or more of the first set of PFLs or one or more of the at least one TN base station and one or more of the second set of PFLs or one or more of the at least one NTN base station are associated with a common expected reference signal time difference, RSTD, value, wherein preferably each of the one or more of the first set of PFLs, the one or more of the at least one TN base station, the one or more of the second set of PFLs, or the one or more of the at least one NTN base station is associated with a delta expected RSTD that is to be applied to the common RSTD value.

7. The apparatus (1802) of claim 1, wherein the at least one NTN base station includes a first NTN satellite base station that covers a first coverage area and a second NTN satellite base station that covers a second coverage area, the at least one processor being further configured to:
receive, from the location management function, LMF, an association between a first set of beams of the first NTN satellite base station and a second set of beams of the second NTN satellite base station; and
measure the first set of beams and the second set of beams based on the association.

8. The apparatus (1802) of claim 7, wherein the at least one processor is further configured to:
skip measuring beams of the second NTN satellite base station that are not associated with the first set of beams of the first NTN satellite base station.

9. The apparatus (1802) of claim 7, wherein the second coverage area partially overlaps with the first coverage area at a coverage overlapping area, and wherein the first set of beams of the first NTN satellite base station and the second set of beams of the second NTN satellite base station are in the coverage overlapping area, wherein preferably the at least one NTN base station is associated with multiple satellite platforms, and the at least one processor is further configured to process the multiple satellite platforms simultaneously.

10. The apparatus (1802) of claim 1, wherein the at least one processor is further configured to:
transmit, to the location management function, LMF, an indication of at least one type of satellite platform supported by the UE for communicating with the at least one NTN base station.

11. The apparatus (1802) of claim 10, wherein the at least one processor is further configured to:
receive, from the LMF, assistance data, AD, that is specific to the at least one type of satellite platform supported by the UE;
wherein preferably the at least one type of satellite platform includes one or more of: a low earth orbit, LEO, satellite platform, a medium earth orbit, MEO, satellite platform, a geostationary earth orbit, GEO, satellite platform, a high elliptical orbit, HEO, satellite platform, or an unmanned aircraft system, UAS, platform, and each of the at least one type of satellite platform is further associated with a list of bandwidths that is to be supported by the UE for communicating with the at least one type of satellite platform.

12. The apparatus (1802) of claim 10, wherein the at least one processor is further configured to:
perform bandwidth stitching between first different satellites of a same satellite platform or between second different satellites of different satellite platforms.

13. The apparatus (1802) of claim 10, wherein the indication further includes:
one or more of a maximum number of satellites supported by the UE for each of the at least one type of satellite platform, a maximum number of transmission and reception points, TRPs, supported by the UE for each of the at least one type of satellite platform, a maximum number of positioning reference signal, PRS, resource sets supported by the UE for each of the at least one type of satellite platform, or a maximum number of PRS resources supported by the UE for each of the at least one type of satellite platform; or
one or more of a maximum number of satellites supported by the UE across all of the at least one type of satellite platform, a maximum number of transmission and reception points, TRPs, supported by the UE across all of the at least one type of satellite platform, a maximum number of positioning reference signal (PRS) resource sets supported by the UE across all of the at least one type of satellite platform, or a maximum number of PRS resources supported by the UE across all of the at least one type of satellite platform.

14. The apparatus (1802) of claim 1, wherein the at least one processor is further configured to:
transmit, to the location management function, LMF, an indication of:
a maximum number of first PFLs supported by the UE for UE positioning with standalone NTN operations, or
a maximum number of second PFLs supported by the UE for UE positioning with a mix of at least one NTN operation and at least one TN operation, wherein the at least one TN operation includes at least one of a universal mobile telecommunications system, UMTS, air interface, Uu, operation or a sidelink, SL, operation.

15. A method (1700) of wireless communication at a user equipment, UE, comprising:
communicating (1702) with at least one terrestrial network, TN, base station via a first set of positioning frequency layers, PFLs, for a UE positioning session; and
communicating (1704) with at least one non-terrestrial network, NTN, base station via a second set of PFLs for the UE positioning session, the second set of PFLs being different from the first set of PFLs;
wherein each of the second set of PFLs or the at least one NTN base station is associated with a timer, the method further comprising:
communicating, for the UE positioning session, with the at least one NTN base station via one of the second set of PFLs for the UE positioning session if the timer is not expired;
not communicating with the at least one NTN base station via one of the second set of PFLs for the UE positioning session if the timer is expired.

## Patentansprüche

1. Vorrichtung (1802) für drahtlose Kommunikation an einem UE (User Equipment), die Folgendes umfasst:
einen Speicher (1826);
mindestens einen Transceiver (1822); und
mindestens einen Prozessor (1828), der mit dem Speicher und dem mindestens einen Transceiver kommunikativ verbunden ist, wobei der mindestens eine Prozessor konfiguriert ist zum:
Kommunizieren (1702) mit mindestens einer TN-Terrestral Network)-Basisstation über einen ersten Satz von PFLs (Positioning Frequency Layers) für eine UE-Ortungssitzung; und
Kommunizieren (1704) mit mindestens einer NTN-(Non-terrestrial Network)-Basisstation über einen zweiten Satz von PFLs für die UE-Ortungssitzung, wobei sich der zweite Satz von PFLs vom ersten Satz von PFLs unterscheidet;
wobei jede aus dem zweiten Satz von PFLs oder die mindestens eine NTN-Basisstation mit einem Timer assoziiert ist, wobei der mindestens eine Prozessor ferner konfiguriert ist zum:
Kommunizieren, für die UE-Ortungssitzung, mit der mindestens einen NTN-Basisstation über eine aus dem zweiten Satz von PFLs für die UE-Ortungssitzung, wenn der Timer noch nicht abgelaufen ist;
Nichtkommunizieren mit der mindestens einen NTN-Basisstation über eine aus dem zweiten Satz von PFLs für die UE-Ortungssitzung, wenn der Timer abgelaufen ist.

2. Vorrichtung (1802) nach Anspruch 1, wobei der erste Satz von PFLs X PFLs umfasst und der zweite Satz von PFLs Y PFLs umfasst, wobei der mindestens eine Prozessor ferner zum Unterstützen von bis zu X + Y PFLs konfiguriert ist.

3. Vorrichtung (1802) nach Anspruch 1, wobei:
die mindestens eine TN-Basisstation auf einer ersten Frequenzbandbreite arbeitet und die mindestens eine NTN-Basisstation auf einer zweiten Frequenzbandbreite arbeitet, wobei sich die erste Frequenzbandbreite von der zweiten Frequenzbandbreite unterscheidet; oder
die mindestens eine TN-Basisstation und die mindestens eine NTN-Basisstation auf derselben Frequenzbandbreite arbeiten.

4. Vorrichtung (1802) nach Anspruch 1, wobei der mindestens eine Prozessor ferner konfiguriert ist zum:
Empfangen des Timers von einer LMF (Location Management Function);
wobei der mindestens eine Prozessor vorzugsweise ferner zum Empfangen, von der LMF, einer Liste verfügbarer PFLs für die mindestens eine NTN-Basisstation vor der UE-Ortungssitzung konfiguriert ist, wobei der zweite Satz von PFLs auf der Basis der Liste verfügbarer PFLs ausgewählt wird.

5. Vorrichtung (1802) nach Anspruch 1, wobei eine oder mehrere aus dem ersten Satz von PFLs oder eine oder mehrere der mindestens einen NTN-Basisstation mit einem ersten erwarteten RSTD-(Reference Signal Time Difference)-Wert und einem ersten Unsicherheitswert assoziiert sind, und eine oder mehrere aus dem zweiten Satz von PFLs oder eine oder mehrere der mindestens einen NTN-Basisstation mit einem zweiten erwarteten RSTD-Wert und einem zweiten Unsicherheitswert assoziiert sind, wobei sich der erste erwartete RSTD-Wert vom zweiten erwarteten RSTD-Wert unterscheidet und der erste Unsicherheitswert sich vom zweiten Unsicherheitswert unterscheidet, wobei vorzugsweise ein oder mehrere erste IEs (Information Elements) für den ersten erwarteten RSTD-Wert und den ersten Unsicherheitswert sich von einem oder mehreren zweiten IEs für den zweiten erwarteten RSTD-Wert und den zweiten Unsicherheitswert in den AD (Assistance Data) unterscheiden.

6. Vorrichtung (1802) nach Anspruch 1, wobei eine oder mehrere aus dem ersten Satz von PFLs oder eine oder mehrere der mindestens einen TN-Basisstation und eine oder mehrere aus dem zweiten Satz von PFLs oder eine oder mehrere der mindestens einen NTN-Basisstation mit einem gemeinsamen erwarteten RSTD-(Reference Signal Time Difference)-Wert assoziiert sind, wobei vorzugsweise jede der ein oder mehreren aus dem ersten Satz von PFLs, die eine oder mehreren der mindestens einen TN-Basisstation, die ein oder mehreren aus dem zweiten Satz von PFLs oder die ein oder mehreren der mindestens einen NTN-Basisstation mit einem erwarteten RSTD-Delta-Wert assoziiert ist, der auf den gemeinsamen RSTD-Wert anzuwenden ist.

7. Vorrichtung (1802) nach Anspruch 1, wobei die mindestens eine NTN-Basisstation eine einen ersten Versorgungsbereich abdeckende erste NTN-Satellitenbasisstation und eine einen zweiten Versorgungsbereich abdeckende zweite NTN-Satellitenbasisstation umfasst, wobei der mindestens eine Prozessor ferner konfiguriert ist zum:
Empfangen, von der LMF (Location Management Function), einer Assoziation zwischen einem ersten Satz von Strahlen der ersten NTN-Satellitenbasisstation und einem zweiten Satz von Strahlen der zweiten NTN-Satellitenbasisstation; und
Messen des ersten Satzes von Strahlen und des zweiten Satzes von Strahlen auf der Basis der Assoziation.

8. Vorrichtung (1802) nach Anspruch 7, wobei der mindestens eine Prozessor ferner konfiguriert ist zum:
Überspringen des Messens von Strahlen der zweiten NTN-Satellitenbasisstation, die nicht mit dem ersten Satz von Strahlen der ersten NTN-Satellitenbasisstation assoziiert sind.

9. Vorrichtung (1802) nach Anspruch 7, wobei der zweite Versorgungsbereich in einem Versorgungsüberlappungsbereich teilweise mit dem ersten Versorgungsbereich überlappt und wobei sich der erste Satz von Strahlen der ersten NTN-Satellitenbasisstation und der zweite Satz von Strahlen der zweiten NTN-Satellitenbasisstation in dem Versorgungsüberlappungsbereich befinden, wobei vorzugsweise die mindestens eine NTN-Basisstation mit mehreren Satellitenplattformen assoziiert ist und der mindestens eine Prozessor ferner zum gleichzeitigen Verarbeiten der mehreren Satellitenplattformen konfiguriert ist.

10. Vorrichtung (1802) nach Anspruch 1, wobei der mindestens eine Prozessor ferner konfiguriert ist zum:
Übertragen, zur LMF (Location Management Function), einer Angabe mindestens eines Satellitenplattformtyps, der vom UE zum Kommunizieren mit der mindestens einen NTN-Basisstation unterstützt wird.

11. Vorrichtung (1802) nach Anspruch 10, wobei der mindestens eine Prozessor ferner konfiguriert ist zum:
Empfangen, von der LMF, von AD (Assistance Data), die für den mindestens einen vom UE unterstützten Satellitenplattformtyp spezifisch sind;
wobei der mindestens eine Satellitenplattformtyp vorzugsweise eines oder mehrere umfasst von: einer LEO-(Low Earth Orbit)-Satellitenplattform, einer MEO-(Medium Earth Orbit)-Satellitenplattform, einer GEO-(Geostationary Earth Orbit)-Satellitenplattform, einer HEO-(High Elliptic Orbit)-Satellitenplattform oder einer UAS-(Unmanned Aircraft System)-Plattform, und wobei jeder der mindestens einen Satellitenplattformtypen ferner mit einer Liste von Bandbreiten assoziiert ist, die vom UE zum Kommunizieren mit dem mindestens einen Satellitenplattformtyp unterstützt werden sollen.

12. Vorrichtung (1802) nach Anspruch 10, wobei der mindestens eine Prozessor ferner konfiguriert ist zum:
Durchführen von Bandbreiten-Stitching zwischen ersten unterschiedlichen Satelliten derselben Satellitenplattform oder zwischen zweiten unterschiedlichen Satelliten verschiedener Satellitenplattformen.

13. Vorrichtung (1802) nach Anspruch 10, wobei die Angabe ferner Folgendes beinhaltet:
eines oder mehrere von einer maximalen Anzahl von vom UE für jeden der mindestens einen Satellitenplattformtypen unterstützten Satelliten; einer maximalen Anzahl von vom UE für jeden der mindestens einen Satellitenplattformtypen unterstützten TRPs (Transmission and Reception Points); einer maximalen Anzahl von vom UE für jeden der mindestens einen Satellitenplattformtypen unterstützten PRS-(Positioning Reference Signal)-Ressourcensätze oder einer maximalen Anzahl von vom UE für jeden der mindestens einen Satellitenplattformtypen unterstützten PRS-Ressourcen; oder
eines oder mehrere von einer maximalen Anzahl von vom UE über alle der mindestens einen Satellitenplattformtypen hinweg unterstützten Satelliten, einer maximalen Anzahl von vom UE über alle der mindestens einen Satellitenplattformtypen hinweg unterstützten TRPs (Transmission and Reception Points), einer maximalen Anzahl von vom UE über alle der mindestens einen Satellitenplattformtypen hinweg unterstützten PRS-(Positioning Reference Signal)-Ressourcensätze oder einer maximalen Anzahl von vom UE über alle der mindestens einen Satellitenplattformtypen hinweg unterstützten PRS-Ressourcen.

14. Vorrichtung (1802) nach Anspruch 1, wobei der mindestens eine Prozessor ferner konfiguriert ist zum:
Übertragen, zu der LMF-(Location Management Function), einer Angabe von:
einer maximalen Anzahl von vom UE für UE-Ortung mit eigenständigen NTN-Operationen unterstützten ersten PFLs, oder
einer maximalen Anzahl von vom UE für UE-Ortung bei einer Mischung aus mindestens einer NTN-Operation und mindestens einer TN-Operation unterstützten zweiten PFLs, wobei die mindestens eine TN-Operation eine UMTS-(Universal Mobile Telecommunications Systems)-Luftschnittstelle-(Uu)-Operation und/oder eine SL-(Sidelink)-Operation umfasst.

15. Verfahren (1700) zur drahtlosen Kommunikation an einem UE (User Equipment), das Folgendes beinhaltet:
Kommunizieren (1702) mit mindestens einer TN-Terrestral Network)-Basisstation über einen ersten Satz von PFLs (Positioning Frequency Layers) für eine UE-Ortungssitzung; und
Kommunizieren (1704) mit mindestens einer NTN-(Non-terrestrial Network)-Basisstation über einen zweiten Satz von PFLs für die UE-Ortungssitzung, wobei sich der zweite Satz von PFLs vom ersten Satz von PFLs unterscheidet;
wobei jede aus dem zweiten Satz von PFLs oder die mindestens eine NTN-Basisstation mit einem Timer assoziiert ist, wobei das Verfahren ferner Folgendes beinhaltet:
Kommunizieren, für die UE-Ortungssitzung, mit der mindestens einen NTN-Basisstation über eine aus dem zweiten Satz von PFLs für die UE-Ortungssitzung, wenn der Timer noch nicht abgelaufen ist;
Nichtkommunizieren mit der mindestens einen NTN-Basisstation über eine aus dem zweiten Satz von PFLs für die UE-Ortungssitzung, wenn der Timer abgelaufen ist.

## Revendications

1. Appareil (1802) de communication sans fil au niveau d'un équipement utilisateur, UE, comprenant :
une mémoire (1826) ;
au moins un émetteur-récepteur (1822) ; et
au moins un processeur (1828) connecté en communication à la mémoire et à l'au moins un émetteur-récepteur, l'au moins un processeur étant configuré pour :
communiquer (1702) avec au moins une station de base de réseau terrestre, TN, par l'intermédiaire d'un premier ensemble de couches de fréquences de positionnement, PFL, pour une session de positionnement d'UE ; et
communiquer (1704) avec au moins une station de base de réseau non terrestre, NTN, par l'intermédiaire d'un second ensemble de PFL pour la session de positionnement d'UE, le second ensemble de PFL étant différent du premier ensemble de PFL ;
dans lequel chacune du second ensemble de PFL ou de l'au moins une station de base NTN est associée à une temporisation, l'au moins un processeur étant configuré en outre pour :
communiquer, pour la session de positionnement d'UE, avec l'au moins une station de base NTN par l'intermédiaire d'une du second ensemble de PFL pour la session de positionnement d'UE si la temporisation n'a pas expiré ;
ne pas communiquer avec l'au moins une station de base NTN par l'intermédiaire d'une du second ensemble de PFL pour la session de positionnement d'UE si la temporisation a expiré.

2. Appareil (1802) selon la revendication 1, dans lequel le premier ensemble de PFL comporte X PFL et le second ensemble de PFL comporte Y PFL, dans lequel l'au moins un processeur est configuré en outre pour prendre en charge jusqu'à X + Y PFL.

3. Appareil (1802) selon la revendication 1, dans lequel :
l'au moins une station de base TN fonctionne sur une première largeur de bande de fréquence et l'au moins une station de base NTN fonctionne sur une seconde largeur de bande de fréquence, la première largeur de bande de fréquence étant différente de la seconde largeur de bande de fréquence ; ou
l'au moins une station de base TN et l'au moins une station de base NTN fonctionnent sur une même largeur de bande de fréquence.

4. Appareil (1802) selon la revendication 1, dans lequel l'au moins un processeur est configuré en outre pour :
recevoir la temporisation à partir d'une fonction de gestion de localisation, LMF ;
dans lequel, de préférence, l'au moins un processeur est configuré en outre pour recevoir, à partir de la LMF, une liste de PFL disponibles pour l'au moins une station de base NTN avant la session de positionnement d'UE, dans lequel le second ensemble de PFL est sélectionné sur la base de la liste de PFL disponibles.

5. Appareil (1802) selon la revendication 1, dans lequel une ou plusieurs du premier ensemble de PFL ou une ou plusieurs de l'au moins une station de base TN sont associées à une première valeur de différence de temps de signal de référence, RSTD, escomptée et à une première valeur d'incertitude, et une ou plusieurs du second ensemble de PFL ou une ou plusieurs de l'au moins une station de base NTN sont associées à une seconde valeur RSTD escomptée, et à une seconde valeur d'incertitude, la première valeur RSTD escomptée étant différente de la seconde valeur RSTD escomptée et la première valeur d'incertitude étant différente de la seconde valeur d'incertitude, dans lequel de préférence un ou plusieurs éléments d'information, IE, initiaux pour la première valeur RSTD escomptée et la première valeur d'incertitude diffèrent d'un ou plusieurs seconds IE pour la seconde valeur RSTD escomptée et la seconde valeur d'incertitude dans des données d'assistance, AD.

6. Appareil (1802) selon la revendication 1, dans lequel une ou plusieurs du premier ensemble de PFL ou une ou plusieurs de l'au moins une station de base TN et une ou plusieurs du second ensemble de PFL ou une ou plusieurs de l'au moins une station NTN sont associées à une valeur de différence de temps de signal de référence, RSTD, escomptée commune, dans lequel de préférence chacune des une ou plusieurs du premier ensemble de PFL, des une ou plusieurs de l'au moins une station de base TN, des une ou plusieurs du second ensemble de PFL, ou des une ou plusieurs de l'au moins une station de base NTN est associée à une RSTD escomptée delta qui doit être appliquée à la valeur RSTD commune.

7. Appareil (1802) selon la revendication 1, dans lequel l'au moins une station de base NTN comprend une première station de base de satellite NTN couvrant une première zone de couverture et une seconde station de base de satellite NTN couvrant une seconde zone de couverture, l'au moins un processeur étant configuré en outre pour :
recevoir, à partir de la fonction de gestion de localisation, LMF, une association entre un premier ensemble de faisceaux de la première station de base de satellite NTN et un second ensemble de faisceaux de la seconde station de base de satellite NTN ; et
mesurer le premier ensemble de faisceaux et le second ensemble de faisceaux sur la base de l'association.

8. Appareil (1802) selon la revendication 7, dans lequel l'au moins un processeur est configuré en outre pour :
sauter la mesure de faisceaux de la seconde station de base de satellite NTN qui ne sont pas associés au premier ensemble de faisceaux de la première station de base de satellite NTN.

9. Appareil (1802) selon la revendication 7, dans lequel la seconde zone de couverture chevauche partiellement la première zone de couverture au niveau d'une zone de chevauchement de couverture, et dans lequel le premier ensemble de faisceaux de la première station de base de satellite NTN et le second ensemble de faisceaux de la seconde station de base de satellite NTN se trouvent dans la zone de chevauchement de couverture, dans lequel de préférence l'au moins une station de base NTN est associée à de multiples plateformes satellites, et l'au moins un processeur est configuré en outre pour traiter simultanément les différentes plateformes satellites.

10. Appareil (1802) selon la revendication 1, dans lequel l'au moins un processeur est configuré en outre pour :
transmettre, à la fonction de gestion de localisation, LMF, une indication d'au moins un type de plateforme satellite pris en charge par l'UE pour communiquer avec l'au moins une station de base NTN.

11. Appareil (1802) selon la revendication 10, dans lequel l'au moins un processeur est configuré en outre pour :
recevoir, à partir de la LMF, des données d'assistance, AD, spécifiques à l'au moins un type de plateforme satellite pris en charge par l'UE ;
dans lequel, de préférence, l'au moins un type de plateforme satellite comporte un ou plusieurs types parmi : une plateforme satellite à orbite terrestre basse, LEO, une plateforme satellite à orbite terrestre moyenne, MEO, une plateforme satellite à orbite géostationnaire, GEO, une plateforme satellite à orbite elliptique haute, HEO, ou une plateforme de système d'aéronef sans pilote, UAS, et chacun de l'au moins un type de plateforme satellite est associé en outre à une liste de largeurs de bande que doit prendre en charge l'UE pour communiquer avec l'au moins un type de plateforme satellite.

12. Appareil (1802) selon la revendication 10, dans lequel l'au moins un processeur est configuré en outre pour :
réaliser un raccord de largeur de bande entre des premiers satellites différents d'une même plateforme satellite ou entre des seconds satellites différents de différentes plateformes satellites.

13. Appareil (1802) selon la revendication 10, dans lequel l'indication comporte en outre :
un ou plusieurs d'un nombre maximum de satellites pris en charge par l'UE pour chacun de l'au moins un type de plateforme satellite, d'un nombre maximum de points d'émission et réception, TRP, pris en charge par l'UE pour chacun de l'au moins un type de plateforme satellite, d'un nombre maximum d'ensembles de ressources de signal de référence de positionnement, PRS, pris en charge par l'UE pour chacun de l'au moins un type de plateforme satellite, ou d'un nombre maximum de ressources de PRS prises en charge par l'UE pour chacun de l'au moins un type de plateforme satellite ; ou
un ou plusieurs d'un nombre maximum de satellites pris en charge par l'UE pour la totalité de l'au moins un type de plateforme satellite, d'un nombre maximum de points d'émission et réception, TRP, pris en charge par l'UE pour la totalité de l'au moins un type de plateforme satellite, d'un nombre maximum d'ensembles de ressources de signal de référence de positionnement (PRS) pris en charge par l'UE pour la totalité de l'au moins un type de plateforme satellite, ou d'un nombre maximum de ressources de PRS prises en charge par l'UE pour la totalité de l'au moins un type de plateforme satellite.

14. Appareil (1802) selon la revendication 1, dans lequel l'au moins un processeur est configuré en outre pour :
transmettre, à la fonction de gestion de localisation, LMF, une indication :
d'un nombre maximum de premières PFL prises en charge par l'UE pour un positionnement d''UE avec des opérations NTN autonomes, ou
d'un nombre maximum de secondes PFL prises en charge par l'UE pour un positionnement d'UE avec un mélange d'au moins une opération NTN et d'au moins une opération TN, dans lequel l'au moins une opération TN comporte au moins une opération d'une interface radio de système universel de télécommunications mobiles, UMTS, Uu, ou d'une opération sur liaison latérale, SL.

15. Procédé (1700) de communication sans fil au niveau d'un équipement utilisateur, UE, comprenant :
la communication (1702) avec au moins une station de base de réseau terrestre, TN, par l'intermédiaire d'un premier ensemble de couches de fréquences de positionnement, PFL, pour une session de positionnement d'UE ; et
la communication (1704) avec au moins une station de base de réseau non terrestre, NTN, par l'intermédiaire d'un second ensemble de PFL pour la session de positionnement d'UE, le second ensemble de PFL étant différent du premier ensemble de PFL ;
dans lequel chacune du second ensemble de PFL ou de l'au moins une station de base NTN est associée à une temporisation, le procédé comprenant en outre :
la communication, pour la session de positionnement d'UE, avec l'au moins une station de base NTN par l'intermédiaire d'une du second ensemble de PFL pour la session de positionnement d'UE si la temporisation n'a pas expiré ;
la non-communication avec l'au moins une station de base NTN par l'intermédiaire d'une du second ensemble de PFL pour la session de positionnement d'UE si la temporisation a expiré.
